(19) Europäisches Patentamt
European Patent Office
Office européen des brevets

(11) EP 4 517 605 A1

(12) **EUROPEAN PATENT APPLICATION**

(43) Date of publication:
**05.03.2025 Bulletin 2025/10**

(21) Application number: **23193779.8**

(22) Date of filing: **28.08.2023**

(51) International Patent Classification (IPC):
***G06N 10/40*** ***(2022.01)*** ***G06N 10/70*** ***(2022.01)***

(52) Cooperative Patent Classification (CPC):
**G06N 10/40; G06N 10/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **IQM Finland Oy**
**02150 Espoo (FI)**

(72) Inventors:
- **Tuorila, Jani**
  **02150 Espoo (FI)**
- **Papic, Miha**
  **80335 Munich (DE)**
- **Hosseinkhani, Amin**
  **80335 Munich (DE)**
- **Auer, Adrian**
  **80335 Munich (DE)**
- **De Vega, Inés**
  **80335 Munich (DE)**

(74) Representative: **Leinweber & Zimmermann Patentanwalts-PartG mbB**
**European Patent Attorneys**
**Viktualienmarkt 8**
**80331 München (DE)**

(54) **METHOD OF DETERMINING A RANGE OF OPTIMAL VALUES FOR PARAMETERS OF QUBITS AND QUANTUM PROCESSING DEVICE AND COMPUTER PROGRAM**

(57) The present invention is related to a method of determining a range of optimal values for parameters of qubits used in an execution of a quantum algorithm on a quantum processing device, a quantum processing device comprising a plurality of qubits, wherein parameter values of said qubits are determined according to the method, and to a computer program for carrying out said method.

Fig. 1

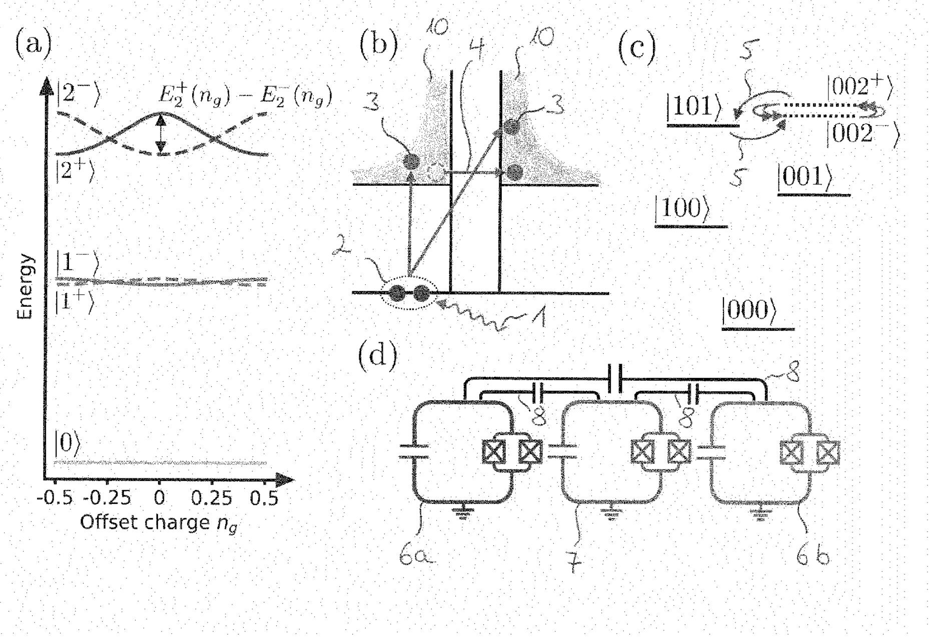


EP 4 517 605 A1

## Description

The present invention is related to a method of determining a range of optimal values for parameters of qubits used in an execution of a quantum algorithm on a quantum processing device, to a quantum processing device comprising qubits whose parameters have optimal values for an execution of a quantum algorithm on the quantum processing device, and to a computer program for carrying out said method.

It is predicted that quantum processing devices are capable to solve certain computational problems much faster than any classical computing device (quantum supremacy). During the last years, tremendous progress could be achieved in building instances of quantum processing devices that may prove the theoretical prediction of quantum supremacy. One key area of research is the design and manufacturing of qubits which are well-suited for use in a quantum processing device.

There exists a plethora of possible realizations of qubits, including atoms, ions, superconductors, quantum dots, etc. In general terms, a qubit is a two-level system described by a Hamiltonian H which depends on certain qubit parameters. During the execution of a quantum algorithm on a quantum processing device, the state of the qubits is transformed by an application of a sequence of quantum gates from an initial state to a final state. This is achieved by an intricate manipulation of the qubits, e.g., via external control pulses.

As a qubit is never completely isolated in a quantum processing device, the qubit, and its control, may be affected by various error sources during the execution of the quantum algorithm. Additionally, there are errors associated with the implementations of the qubit and gates, not just due to the coupling to the environment, albeit this is currently the biggest issue. Typically, all qubit implementations have more than two levels which sometimes cannot be ignored. Therefore, the final state of the qubits after the execution of the quantum algorithm may be different from the theoretical result, thereby impairing the result of the computation.

There exist various approaches in the art on how to deal with this problem. One approach is quantum error correction which comprises encoding a logical qubit in a plurality of physical qubits and performing an error correction operation if an error has occurred. While this approach works well in theory, effective quantum error correction codes require a large number of physical qubits to encode one logical qubit and are thereby resource intensive.

Another approach is to find ways to protect the qubits from the influence of the error sources on a fundamental level, e.g., by designing qubits which are less error prone. For example, arxiv:2211.14159v1 by S. Eun et. al. proposes a shape-optimized transmon qubit with a reduced decoherence compared to the prior art by adjusting the geometry of the capacitor pads and the junction wire. In "Surface loss calculations and design of a superconducting transmon qubit with tapered wiring" by J.M. Martinis, npj Quantum Inf 8, 26 (2022) analytical formulas are presented for simplified but useful qubit geometries that predict surface dielectric loss when its thickness is much less than the metal thickness, the limiting case needed for real devices. These formulas can be used to precisely predict loss and optimize the qubit layout

In general, however, there are several error sources that may be limiting the performance of the quantum processing device. Typically, the contributions of the error sources on the error have different dependencies on the qubit parameters, and often decreasing the contribution of one error source might increase the contribution of a different error source. This makes it unclear how to target qubit parameters in design and fabrication to achieve maximal performance.

In view of these problems in the prior art it is therefore an object of the present invention to reduce errors in the execution of a quantum algorithm on a quantum processing device.

According to a first aspect of the present invention this object is attained by a method of determining a range of optimal values for parameters of qubits used in an execution of a quantum algorithm on a quantum processing device, the method comprising the steps of:

identifying a plurality of different error sources each causing an individual error contribution to the error in the implementation of the algorithm, wherein each individual error contribution depends on qubit parameters;

deriving how these contributions scale with the qubit parameters;

defining a performance measure C for the algorithm based on the individual error contributions of each error source;

computing the value of the performance measure C for a range of physically feasible values of the qubit parameters;

identifying the range of optimal values of qubit parameters as those among the range of feasible values of qubit parameters for which the computed values of the performance measure C fullfil an optimization criterion.

Terminology used throughout the present specification is also in line with standard terminology as is for instance used in "Gate-based superconducting quantum computing", J. Appl. Phys. 129, 041102 (2021).

The present application was originally filed in colour, and any reference to colour in the present copy relates to the colours as originally filed.

A quantum processing device may comprise a plurality of qubits, state preparation means for preparing each qubit in a desired initial state, gate application means for applying a sequence of quantum gates, in particular single-qubit gates and two-qubit gates, to the qubits of the quantum processing device, and read-out means for reading out the final state of the qubits.

A quantum algorithm may include instructions related to the preparation of the qubits in a certain initial state, to an application of a gate sequence of qubit gates, in particular single- and two-qubit gates, to be applied to the initial state, and to a measurement of the final state of the qubits.

Each qubit of the quantum processing device is associated with at least one, in particularmore than one, qubit parameter. The qubit parameters may be determined, e.g., by a manufacturing process of the qubit. The manufacturing process may also limit feasible values of the qubit parameters to a certain range.

The execution of the quantum algorithm on the quantum processing device is associated with a certain error E. The execution of the quantum algorithm on the quantum processing device is in general affected by several error sources. I.e., each of the error sources causes an individual error contribution to the error in the implementation of the algorithm. The error contribution of an error source may depend on the qubit parameters, or it may be independent of the qubit parameters. Each error source may cause a certain error. As the method of the present invention aims at finding a range of optimal values of parameters for the qubit, the method comprises identifying error sources for which the individual error contribution depends on the qubit parameters. In one example, the method may comprise identifying all error sources affecting the execution of the algorithm. Error sources whose contribution do not depend on the qubit parameters are discarded, i.e., they are not among the identified error sources. An exemplary method to identify error sources is described in WO 2023/057679 A1 authored by some of the inventors of the present application

Each error contribution may scale with the qubit parameters. I.e., there may be a functional relationship between the error contribution and the qubit parameters. The scaling may be derived using a model describing how the error source affects the qubit and/or the execution of the algorithm. Said deriving may be via an analytical solution of the model in one example. In another example said deriving may comprise numerical techniques using a classical computer.

As explained above, the execution of the quantum algorithm on the quantum processing device comprises the implementation of several operations, including e.g., state preparation, an application of a quantum gate and read-out. Here, idling may also be considered as an operation. Each error source may cause an error in one, more, or each of these operations, thereby causing a plurality of individual error contributions associated with the respective operations.

The performance measure is typically a distance measure between the desired and observed outputs of a quantum operation, e.g., a quantum gate. The most common measures include state or process fidelities, trace distance or diamond norms (see also arxiv:2305.08916v1 by M. Papič et al. for futher details on performance measures).

The performance measure C (sometimes also denoted as performance metric in this application) may be defined specifically for the algorithm to be executed on the quantum processing device. Thus, different algorithms may have different performance measures. The performance measure is a function of the qubit parameters, as the individual error contributions depend on the qubit parameters. For specific values of the qubit parameters, the value of the performance measure is indicative of the error in the execution of the quantum algorithm on the quantum processing device comprising qubits with the specific values of the qubit parameters. In one example, the performance measure may be defined such that the smaller the value of C, the smaller the influence of the error sources on the execution of the quantum algorithm, and the better the result of the computation.

Therefore, the method according to the present invention comprises identifying a range of optimal values of qubit parameters as those among the range of feasible qubit parameters for which the computed values of the performance measure C fulfil an optimization criterion. In one example the optimization criterion may be fulfilled when the computed value of the performance measure does not exceed a predetermined threshold. I.e., identifying the range of optimal values of qubit parameters may be by identifying the range of optimal values as those among the range of feasible qubit parameters for which the computed values of the performance measure do not exceed the predetermined threshold. Thus, by using qubits having qubit parameters in the identified optimal range for the execution of the quantum algorithm, the error in the execution is reduced compared to the prior art. The error may even be minimal in certain embodiments.

The method of the present invention provides a systematic approach to determine qubit parameters. This is different from the prior art where values of qubit parameters are often chosen relatively arbitrary so that no error source has a contribution which is completely detrimental to the execution of the algorithm. The method may thus be used to guide the design of future qubits and quantum processing devices.

Due to fabrication inaccuracies of the qubits and possible approximations, one may consider an optimal range of parameters which is a finite range interval rather than a single optimal value of each parameter in one example. However, in certain examples, the range may comprise only a single value for at least one, and in particular for each parameter.

In one example, the optimal range may be determined by discretizing the range of feasible qubit parameters and calculating the value of the performance measure for each discretized parameter value. The optimal range of parameters may be those for which the value of the performance measure is within the 15% percentile, preferably the 10% percentile, more preferably the 5% percentile in one example. In another example, the range of optimal parameters may be determined by use of standard optimization procudures, like minimization procedures.

in one embodiment, the method may further comprise the step of fabricating the quantum processing device comprising qubits for which the parameter values are in the identified optimal range. Thus, this quantum processing device may be optimal for the execution of the quantum algorithm.

In one embodiment, said performance measure C may be defined as a weighted sum of the individual error contributions $E_i$ according to $C = \Sigma_i w_i E_i$ with real weights $w_i \geq 0$. In one of these embodiments, the weight $w_i$ of each individual error contribution $E_i$ may be determined on the basis of a number of applications of the corresponding operation in the algorithm. As explained above, operations may include state preparation, application of single-qubit gates and two-qubit gates, read-out and idling. The real weights $w_i \geq 0$ may thus depend on the algorithm. In particular, the sum may run over all error sources and all operations implemented by the quantum processing device according to the instructions of the quantum algorithm. For example, there may be two error sources $S_1$ and $S_2$. Error source $S_1$ may cause an error contribution $E_{1,SP}$ to state preparation and an error contribution $E_{1,SQG}$ to the application of a single-qubit gate . Error source $S_2$ may cause an error contribution $E_{2,SQG}$ to the application of a single-qubit gate and an error contribution $E_{2,TQG}$ to the application of a two-qubit gate. Then,

$$C = w_{1,SP}E_{1,SP} + w_{1,SQG}E_{1,SQG} + w_{2,SQG}E_{2,SQG} + w_{2,TQG}E_{2,TQG},$$

wherein the weights $w_{1,SP}$, $w_{1,SQG}$, $w_{2,SQG}$, $w_{2,TQG}$ may reflect the number of applications of the corresponding operation during the execution of the quantum algorithm.

In one embodiment, the method may further comprise the step of defining an architecture and coupling graph of the quantum processing device. This may allow to identify the different circuit elements (with different circuit parameters) that need to be considered. A circuit element may be e.g., a qubit. The architecture may be descriptive of the arrangement of the qubits, and potential other circuit elements, like couplers, in space. The coupling graph (connectivity graph) may be descriptive of the elements which may interact with each other.

In one example, the quantum processing device may comprise superconducting qubits that are arranged on a square lattice in two dimensions, wherein qubits which are nearest neighbors on the lattice are couplable by tunable couplers. In this case, the method comprises identifying a square grid architecture with nearest-neighbor coupling. For optimizing the parameters of the qubits it may be sufficient to consider only a pair of qubits coupled by a tunable coupler. In the case of transmons, it is well known that the frequencies of the two qubits should differ by about one anharmonicity (which should be approximately the same for both qubits) to avoid frequency crowding and to allow for an efficient implementation of two-qubit gates. Thus, it is sufficient to identify the range of optimal qubit parameters for only one of the two qubits, for example the one with higher frequency, as the optimal parameters of the other one of the two qubits may be determined from the optimal parameters of the one qubit.

In certain instances, determining the scaling of the error contributions on the qubit parameters may include determining a complete functional relationship between the error contributions and the qubit parameters from a model, e.g., via an analytical expression or a numerical analysis. This allows to calculate the values of the performance measure for the range of physically feasible values of the qubit parameters. However, in many instances it may not be possible to find such a functional relationship, and it may only be possible to determine the scaling of the error contributions with the qubit parameters. Thus, in one embodiment, the method may further comprise the step of obtaining a test device and characterizing error source parameters of the test device. The test device may be a quantum processing device with qubits having known test qubit parameters. The test qubit parameters may be completely determined due to the manufacturing process in one example. In another example, the test qubit parameters of the qubits of the test device may be determined by experimental analysis. The error source parameters of the test device may be characterized using experimental data. Possible ways how to experimentally characterize error source parameters are disclosed, e.g., in M. Papic and I. de Vega, Phys. Rev. A 105, 022605; M. Papic, et al. arXiv:2305.08916; otherwise some examples for T1 and T2 are also described in "Qubit characterization and optimal control" by H. Suominen, Master's thesis, University of Helsinki, Department of Physics, Helsinki, February 28, 2022. In one example, characterizing error source parameters may include determining values of the error source parameters of the test device comprising the qubits with the known test parameters. As the scaling of the error contributions with the qubit parameters has been determined, it is then possible to obtain values of the error contributions, and thereby of the performance measure, for the range of physically feasible values of the qubit parameters using the determined scaling and the determined values of the error source parameters.

In one embodiment, said individual error contributions may include at least one corresponding to a single-qubit gate, a two-qubit gate, a potential error when the qubit is idling, state preparation or read-out. In this case, it may be preferable that the weights of the performance measure are chosen to account for the relative number of single- and two-qubit gates, and also to correctly take into account the fact that the error in the state preparation occurs only once, while that gate errors are significantly amplified after a number of gate applications. As an example, if we consider an algorithm with a single two-qubit gate and four single-qubit gates, the weights for the single-qubit gate error may be four times that of the two-qubit gate error. A ratio of the number of single-qubit gates to the number of two-qubit gates being 4:1 naturally arises in certain algorithms.

For the case of of transmon qubits, a number of implementations from published papers may be considered in one example. The computed values of the performance measure C for these implementations may be plotted on a (2D) colour plot with the axes representing the parameter values of the high-frequency qubit, and the low-frequency qubit is assumed to have a similar anharmonicity and is detuned by one anharmonicity; these are the conditions for implementing high-fidelity gates. As the algorithm of choice determining the weights in the error sum, two single-qubit $\pi$ rotations and two single-qubit $\pi/2$ rotations per each two-qubit gate are considered. The error in the state preparation is weighted by assuming that the number of gates is determined by the coherence time $T_1$ of the qubit relative to the gate durations, so that the weight for state preparation $w_{SP}$ is $w_{SP} = 10(t_{SQG} + t_{TQG})/T_1$. Here, $t_{SQG}$ is the gate duration of the single-qubit gate and $t_{TQG}$ is the gate duration of the two-qubit gate. This is done since a specific algorithm is not considered in this demonstration.

In one example, said individual error contributions may include for each error source at least one corresponding to a single-qubit gate, a two-qubit gate, a potential error when the qubit is idling, state preparation or read-out.

In one embodiment, said error sources may include at least one of decoherence, relaxation and pure dephasing. In one example, said error sources may include all of the above.

In one example of the method at least one of the qubits of the quantum processing device may be a superconducting qubit. In one example, at least one of the qubits may be a transmon. In an embodiment, all qubits of the quantum processing device may be superconducting qubits. In an embodiment, all qubits may be transmons.

When the qubit(s) is a/are superconducting qubit(s), the qubit parameters may be selected from a list comprising a charging energy $E_c$, a Josephson energy $E_J$, and an inductive energy $E_L$. The qubit parameters may depend on the type of superconducting qubit. When the qubit(s) is a/are transmon(s), the qubit parameters may include or may be the charging energy Ec and the Josephson energy $E_J$ in one example. In another example where the qubit(s) is a/are transmon(s), the qubit parameters may include or may be the charging energy Ec, the Josephson energy $E_J$ and the inductive energy $E_L$.

In one embodiment, in particular when the qubits are superconducting qubits, said error sources may include at least one of charge noise, flux nose, leakage, parity switch or thermal excitations. In one example, said error sources may include all of the above. The thermal excitation error contributes to the state preparation rather than a gate error. The other error sources may only affect the gates.

In one embodiment the performance measure is defined as

$$C = \sum_{i=T_1,T_\phi,\text{parity}} \mathrm{w}_{TQG,i}\, E_{TQG,i} + \sum_{i=q_1,q_2} \sum_{j=T_1,T_\phi,\text{leak}} \mathrm{w}_{SQG,i,j} E_{SQG,i,j} + \sum_{i=q_1,q_2} \mathrm{w}_{SP,i} E_{SP,i},$$

wherein $i, j = T_1$, $T_\phi$, parity, leak is a label for charge noise, flux noise, parity switch and leakage, respectively, $i = q_1$, $q_2$ is a label for two qubits $q_1$, $q_2$; $w_{TQG,i}$, respectively $E_{TQG,i}$ are the weights, respectively error contributions associated with two-qubit gates and caused be the error source with label i; $w_{SQG,i,j}$, respectively $E_{SQGi,j}$ are the weights, respectively error contributions associated with single-qubit gates applied to the qubit with label $i = q_1$, $q_2$ and caused by the error source with the label j; and $w_{SP,i}$, respectively $E_{SP,i}$ are the weights, respectively error contributions associated with state preparation of the qubit with the label $i = q_1$, $q_2$. An explicit form of the error contribution when the error contributions are infidelity contributions is presented in Eq. (30) below.

In one embodiment at least one, and in particular all error contributions may be an infidelity contribution. The infidelity is defined as $E=1-\mathcal{F}$, wherein $\mathcal{F}$ is the fidelity. The fidelity may be understood as the inner-product of a state obtained from the actual execution of the quantum algorithm with a state that would be ideally obtained under the error-free execution. For a perfect, error-free execution of the algorithm, the fidelity is $\mathcal{F}=1$, respectively the infidelity $E=1-\mathcal{F}=0$. For a realistic execution of the quantum algorithm, the infidelity E > 0. In one example where one of the error sources affects an operation implemented by the quantum processing device, the infidelity contribution of the error sources may be described using the average process fidelity defined as $\mathcal{F}(\mathcal{E}) = \int d\psi \langle\psi|\mathcal{E}(|\psi\rangle\langle\psi|)|\psi\rangle$, wherein $\varepsilon$ is the quantum channel describing the faulty implementation of the operation (e.g., faulty implementation of two-qubit gate). In one example, $d\psi$ may be the Haar measure. In another example, where the error source only affects a quantum state with state vector $|\psi\rangle$, the infidelity contribution may be described using a state fidelity $\mathcal{F}(|\psi\rangle) = \langle\psi|\mathcal{E}(|\psi\rangle\langle\psi|)|\psi\rangle$, wherein $\varepsilon$ is the quantum channel modelling the effect of the error source on the quantum state.

According to a second aspect of the present invention, there is provided a quantum processing device comprising a plurality of qubits, wherein parameters values of said qubits are within a range of optimal values for an execution of a quantum algorithm on the quantum processing device, said range being determined by the method according to anyone of the above.

The quantum processing device according to the second aspect of the invention comprises qubits having optimal parameter values determined according to any embodiment or example of the method according to the first aspect of the present invention. Everything said above in the relation to the method also applied to the quantum processing device according to the second aspect of the invention.

According to a third aspect of the invention, there is provided a computer program product including instructions which, when the program is executed by a computer, cause the computer to carry out the following steps:

- receiving qubit parameters, a range of physically feasible values of the qubit parameters and identifiers identifying a plurality of different error sources each causing an individual error contribution to the error in the implementation of a quantum algorithm on quantum processing device comprising the qubits, wherein each individual error contribution depends on qubit parameters;
- deriving how these contributions scale with the qubit parameters;
- defining a performance measure C for the quantum algorithm based on the individual error contributions of each error source;
- computing the value of the performance measure C for the range of physically feasible values of the qubit parameters;
- identifying the range of optimal values of qubit parameters as those among the range of feasible values of qubit parameters for which the computed values of the performance measure C fulfil an optimization criterion.

The computer program product according to the third aspect of the invention is configured to implement the method according to the first aspect of the invention.

In the following description, the invention will be specified in greater detail by way of examples, with reference to the drawings:

**Brief description of the drawings:**

**Figure 1.** A schematic representation of the effect of a parity switch on a single transmon and on a two-qubit gate. (a) The energy diagram of a single offset-charge-sensitive transmon with $E_J/E_C$ = 10 with two distinct parity manifolds, marked with a + and -. While the ground state 10) also comprises of two distinct parity levels, the difference between them is not visible. (b) Illustration of two parity switching mechanisms. The vertical axis represents the energy, with the left and right regions corresponding to the two sides of the Josephson junction with the middle region corresponding to the insulator. The light grey (ref. sign (10)) area corresponds to the density of state of a BCS superconductor on both sides of the junction. *Orange* (ref. sign (1)): A high energy photon breaks down a Cooper pair (dark blue, ref. sign (2)) thus generating two quasiparticles (light blue, ref. sign (3)), with one quasiparticle tunneling across the junction. *Green* (ref. sign (4)): A preexisting quasiparticle tunnels across the junction. (c) The energy level diagram of the states involved in the operation of a diabatic CZ gate. The Rabi oscillation between the levels $|101\rangle \leftrightarrow |002\rangle$ is marked with blue arrows (ref. sign (5)), however the larger charge dispersion of the second excited state means that both parity states of the $|002\rangle$ level cannot be considered degenerate anymore, (d) The lumped element model of the tunable-coupler circuit used in the implementation of diabatic CZ gates, consisting of two computational transmons (dark and light blue, ref. sign (6a) and ref. sign (6b)), a flux-tunable coupler (green, ref. sign (7)) and capacitive couplings between the transmons (black, ref. sign (8)). The readout resonators and drive lines for the implementation of single-qubit gates are not included in the schematics.

**Figure 2.** Effects of a parity switch on the fidelity of a CZ gate. (a) Analytical (red circles) predictions of the conditional-phase difference of the CZ gate between the two parities. The theory prediction from Eqs. 17 and 15 are compared to the phase extracted from a full numerical simulation of the gate (blue crosses), with the parameters from Table 2. The inset displays the relative absolute error between the analytical predictions and the numerical results. The x-axis represents the $E_J/E_C$ ratio of the qubit with a higher frequency. (b) Gate infidelity after a parity switch on Qubit 2, where the theory predictions (red circles) only take into account the effect on the conditional phase, according to Eq. 24. The green lines (ref. sign (20)) are estimates of the upper bound for the infidelity contribution of quasiparticle induced decoherence on the two-qubit gate system, with the parity lifetimes $T_P$ measured by different references: [1] Kurter, C., et al. (2022)[51], Diamond, S., et al. (2022)[48] and [3] Risté, D., et al. (2013)[49]. The grey region (ref. sign (21)) is the region in which other errors are more prominent and the effect of a parity switch is negligible. It therefore represents the lower bound of the infidelity, which is largely independent of the ratio $E_J/E_C$.

**Figure 3.** Comparison of the analytical formulas with numerical results obtained via exact diagonalization in the idling regime. (a) Largest derivatives in Eq. 26 obtained numerically (lines, ref. signs (31)-(35)) and from Eq. 27 (circles, ref. signs (31)-(35)). The x-axis represents the coupler frequency, with the two idling frequencies denoted with black dashed vertical lines. The dots correspond to the derivatives obtained using Eq. 27. (b) Comparison of numerical and analytical results for the root-mean-squared coupling strength at the idling point (defined in Eq. 28), with the bar graph displaying the numerical values of the coupling for the 8 different parity states for the highlighted data point. The parameters for the bar plot correspond to panel (a). The parameters for both plots correspond to the third (from the left) data point in Fig. 2(a,b).

**Figure 4.** (a) Schematic representation of the square grid architecture, with high-(dark blue, ref. sign (41)) and low-frequency (light blue, ref. sign (42)) transmons, connected via tunable couplers (green, ref. sign (43)). (b) Values of $E_J$ and $E_C$ of Qubit 2 ($q_2$) from different experimental implementations of the tunable coupler transmon architecture. Both parameters are extracted from the reported $\omega_{q2}$ and $\alpha_{q2}$, and therefore the points are only an approximation[41]. The annotations refer to the following references [1] Collodo, M. C., et al. (2020)[44], [2] Xu, Y., et al. (2020)[36], [3] Sung, Y., et al. (2021)[27], [4] Wu, Y., et al. (2021)[10], [5] Xu, H., et al. (2021)[28] and [6] Google Quantum AI (2022)[7]. The black lines (ref. sign (44)) represent constant ratios of $E_J/E_C$ and the red lines (ref. sign (45)) correspond to contours of constant qubit frequency $\omega_{q2}$. (c) Schematic representation of the circuit used to infer the weights in Eqs. 29 and 30, with the state preparation pictured on the left (in purple, ref. sign (46)), single-qubit $\pi$ and $\pi/2$-rotations in green (ref. sign (47)) and blue (ref. sign (48)) respectively, and the two-qubit CZ gate in orange (ref. sign (49)). N is the number of times the pictured circuit (without the state preparation) is repeated before measurement and therefore an integer determined by the reference coherence time. In our case, we consider $N = \left\lfloor \frac{T_{1,0}}{10(t_{TQG}+2t_{SQG})} \right\rfloor$. (c) The performance metric C defined in Eq. 30 plotted for different values of the second (higher frequency) transmon $E_J$ and Ec. We consider a single-qubit gate implemented with a Gaussian DRAG pulse with a duration of $t_{SQG}$ = 16ns, a two-qubit gate duration of $t_{TQG}$ = 50ns and three different reference coherence times indicated on top of each panel. For all three cases, the reference $T_{\phi,0} = T_{1,0}$ at $E_J = 12 \cdot h$ GHz and $E_C = 0.2 \cdot h$ GHz for Qubit 2 ($q_2$) with the parameters of Qubit 1 ($q_1$) given in Table 2. All the parameters (transmon parameters and decay times) are scaled accordingly to different values of $E_J$ and $E_C$, and for each qubit individually, as described in Table 2. The solid lighter green contour (ref. sign (40a)) marks the region in the plot with the lowest value of the performance metric C, defined by the 10th percentile of the plotted values. The dashed darker green contour (ref. sign (40b)) is obtained with a density matrix simulation of the circuit from panel (c) with the same errors, but instead of evaluating the function C, it is obtained by minimizing the infidelity of the state before measurement.

**Figure 5.** The relative contributions (ref. signs (51) - (55)) to the function C (in Eq. 29) from the error sources listed in Table 1 (top) and the value of the function C for different reference coherence times (x-axis), with $T_{\phi,0} = T_{1,0}$ at the reference point which is identical to the one used in Fig. 4 (bottom). Panel (a) shows a well-designed system, where the parameters $E_J$ and Ec are adapted to the coherence times that are achievable. Panel (b) displays the cost function C at different coherence times, but always with the same $E_J$ and $E_C$, corresponding to point [5] in Fig. 4(b).

## Short summary

We demonstrate how to design the circuit parameters of a transmon-based quantum computer for maximal fidelity, by taking into account achievable coherence properties. We consider the coherence properties of the transmon as well as errors affecting the operation of a gate. To this aim, we have also identified a new parity-switch-induced error mechanism of the diabatic two-qubit gate. We provide analytical insight into the effect on the infidelity, which was also confirmed numerically and show that this error can be the dominant quasiparticle-related error source of the two-qubit gate. Moreover, we also demonstrate how quasiparticle dynamics resulting in uncontrolled parity switches induce a residual interaction between the qubits in a tunable coupler circuit.

## Introduction

While quantum processors continue to progress towards practical use, the errors present in current systems are still the most limiting factor. One of the main limitations of superconducting-based quantum computers are the coherence properties of the circuits. There have been several proposals to deal with this issue, by either designing new types of qubits[1,2] or further optimizing current designs, typically by focusing on the coherence times of the circuit[3,4]. However, in the latter case, we often encounter trade-offs between different circuit properties. As an example, the suppression of charge noise of the transmon qubit comes at the cost of low anharmonicity which puts a lower bound on the duration of single-qubit operations[5]. Nonetheless, the *scaling* of both of these errors, with the circuit parameters was found to be very beneficial and the transmon has emerged as the most widely-used qubit type in several large-scale experiments[6-10]. This example illustrates the importance of understanding the different errors affecting current quantum hardware, as well as the fact that if we wish to design the circuit parameters in an informed way we need to acknowledge a plethora of possible error sources, which are not necessarily limited only to the coherence properties of the circuit.

While there is a plethora of possible sources of error during the quantum algorithm execution, quasiparticle excitations are considered an intrinsic noise in superconducting-based devices that can cause different type of errors[11,12]. For superconducting qubits, quasiparticle tunneling across the Josephson junction couples to the qubit phase degree of freedom, which leads to energy relaxation $T_1$ and dephasing $T_2$ type of noise[13-18].

These detrimental quasiparticle effects have, in turn, motivated research for finding mitigation strategies such as normal-metal traps[19-21], band-gap engineering[22-24] and better qubit design[2]. There have also been efforts towards designing new types of superconducting qubits that are expected to be intrinsically robust against quasiparticle tunneling[26].

Currently, all of the largest superconducting quantum computers are based on the transmon qubit[6-10]. In transmon qubits, the qubit levels are logical states comprised of two nearly degenerate physical levels separated by an energy splitting which arises due to the two possible charge parities[5,17], as shown in Fig. 1 (a). This picture is equivalent to the transmon being in only one of the two parity manifolds, but switching between them at a rate much faster compared to the time needed to obtain a sufficiently large number of shots. Two different parity-switching mechanisms are pictured in Fig. 1(b). Since the energy difference between these two physical states is exponentially suppressed in the transmon regime, quasiparticle effects were typically analyzed in the context of the decoherence induced by the fluctuation between these two levels, rather than the unitary effects of the state non-degeneracy, as the latter effects are typically negligible in the computational subspace of the transmon. However, often the higher non-computational levels of the transmons in the circuit cannot be completely ignored, which is relevant since the physical state splitting of the higher excited states is much larger compared to the first excited and ground states, as shown in Fig. 1(a) and by Eq. 4.

Parity-switching in the second-excited state can therefore potentially become a notable source of error in diabatic CZ (controlled-Z) or more generally CPHASE (conditional-phase) gates realized in the tunable coupler architecture[27-36].

In a setup shown in Fig. 1(d), the interaction strength between the two transmon qubits ($q_1$ and $q_2$) can be controlled using a third, frequency-tunable, transmon which is generally referred to as the tunable coupler (c). During a diabatic CPHASE gate, the conditional phase is collected during a Rabi oscillation between the $|101\rangle$ and 1002) states of the system, as illustrated in Fig. 1(c). Here, the labelling of the states is defined as $|q_1, c, q_2\rangle$. Since the second excited state of one of the computational transmons is significantly populated during the gate operation, the non-degeneracy of the two parity levels and, therefore, quasiparticle tunneling in the transmon can become a notable source of error in the gate operation.

The diabatic CPHASE gate is currently one of the most promising gate implementations in large-scale quantum computers[6,7,9,10] and, thus, it is important to study the susceptibility to parity-switching errors during its operation.

Besides the ability to perform fast, high-fidelity gate operations, one of the main reasons for the introduction of the tunable coupler is the fact that the static residual-ZZ interaction between the qubits can be completely suppressed by tuning the coupler transmon to a specific frequency[27,29], thus leading to reduced cross-talk and spectator qubit related decoherence[37]. When determining this frequency, it has been shown that the higher-levels of the tunable coupler system are once again relevant[27,30], thus implying that quasiparticle dynamics might affect our ability to effectively decouple the qubits.

We first develop analytical theory of parity switches in a tunable-coupler based architecture, and demonstrate that the effects of a parity switch in a two-qubit gate can be a relevant source of error, even in the transmon regime where $E_J/E_C \gg 1$. Moreover, this previously unidentified error can, in certain regimes, be the dominant quasiparticle-induced error mechanism during a diabatic two-qubit gate, indicated by a comparison to currently achievable parity switching rates observed in superconducting circuits. Furthermore, we show how the inherent stochastic nature of parity switching events limits the ability to suppress any unwanted longitudinal interactions between the qubits, which was one of the main reasons for the introduction of tunable couplers[38]. We find that the magnitude of the unwanted interactions make this effect relevant in the near future, as coherence times are developed into the millisecond regime[39,40].

These results are then used to find better transmon parameter regimes for future transmon-based devices, based on minimizing a performance measure related to the infidelity of a given circuit. We go beyond simple coherence times by additionally acknowledging the intrinsic errors associated with single and two-qubit gate operations and state preparation, thus demonstrating how informed design choices can aid the improvement of current quantum computers.

## Results

### Modeling the Dynamics

Here, we present how a parity switch affects the tunable coupler architecture, and derive analytical results describing the magnitude of the effect. The Hamiltonian of an individual transmon, not taking into account potential higher order contributions to the Josephson energy[41], is given by[5,42]

$$\hat{H} = 4E_C\left(\hat{n} - n_g + \frac{P-1}{4}\right)^2 - E_J\cos\hat{\phi}, \quad (1)$$

where the operator $\hat{n}$ represents the dimensionless charge and $\hat{\phi}$ is the superconducting phase operator across the Josephson junction. The variables $E_C$, $E_J$ and $n_g$ represent the charging energy of a Cooper pair (i.e. the energy required to add a single electron of the Cooper-pair to the transmon island), Josephson energy and dimensionless offset charge respectively. The variables $\hat{n}$ and $\hat{\phi}$ are connected via the cannonical commutation relation $[\hat{\phi}, \hat{n}] = i$. Additionally we have included a discrete parity variable $P \in \{-1, +1\}$, corresponding to the parity of the number of *electrons* that have tunneled across the junction. We observe that the parity term has the same effect as a shift of the offset charge by $\Delta n_g = 1/2$.

The eigenenergies of the Hamiltonian in Eq. 1 have been analytically determined already in Ref.[5] and the low-energy manifold of a single transmon can be approximated in the asymptotic limit of $E_J/E_C >> 1$ as

$$\hat{H}/\hbar \simeq [\omega + \delta\omega(P,n_g)]\hat{a}^\dagger\hat{a} + \frac{\alpha + \delta\alpha(P,n_g)}{2}\hat{a}^\dagger\hat{a}^\dagger\hat{a}\hat{a}, \quad (2)$$

where a are bosonic annihilation operators, and $\omega \simeq \sqrt{8E_JE_C} - E_C$ and $\alpha \simeq -E_C$ are the expressions for the transmon (angular) frequency and the anharmonicity in the asymptotic limit, respectively. Here, we have already taken into account the fact that the different parities have almost identical parameters, and the small differences between them are taken into account with the two parameters depending on the parity, $\delta\omega(P,n_g)$ and $\delta\alpha(P,n_g)$. The parity $P$ therefore divides the eigenstates of the Hamiltonian in Eq. 1 into two distinct manifolds, as illustrated in Fig. 1(a).

Denoting the eigenenergies of the original transmon Hamiltonian in Eq. 1 as $E_i$ with $i \in \{0, 1, 2, 3, ...\}$, the difference between the energy levels of the different parity states is asymptotically approximated by[5]

$$E_m^+(n_g) - E_m^-(n_g) \simeq \varepsilon_m\cos(2\pi n_g), \quad (3)$$

where the superscript refers to the parity and the charge dispersion $\varepsilon_m$ is given by

$$\varepsilon_m \simeq (-1)^m E_C\frac{2^{4m+5}}{m!}\sqrt{\frac{2}{\pi}}\left(\frac{E_J}{2E_C}\right)^{\frac{m}{2}+\frac{3}{4}} e^{-\sqrt{8E_J/E_C}}. \quad (4)$$

While the exponential suppression of the charge dispersion with the ratio $E_J/E_C$ is well-known and the main reason for the introduction of the transmon, the formula in Eq. 4 also predicts a significant increase in the charge dispersion of higher excited states. This means that even though the effect of a parity switch may be small in the computational subspace, the effect can be significantly more pronounced if higher-excited states are involved in the operation of two-qubit gates. More specifically $|\varepsilon_2/\varepsilon_1| \simeq 2^{5/2}\sqrt{E_J/E_C} \sim 40$, for $E_J/E_C \sim 50$. This difference is even more pronounced since certain effects scale with the square of the charge dispersion, as we show in the following. Due to this rapid scaling, we neglect the effect on the first excited (i.e. $\delta\omega = 0$) state and only focus on the second excited state.

The parameters of the Hamiltonian in Eq. 2 are related to the eigenenergies of the Hamiltonian in Eq. 1 via the relations

$$E_1^P = \omega + \delta\omega(P,n_g), \quad (5)$$

$$E_2^P = 2\omega + \alpha + 2\delta\omega(P,n_g) + \delta\alpha(P,n_g), \quad (6)$$

and by additionally defining the parity-averaged frequency and anharmonicity as $\hbar\omega = [E_1^+(n_g) + E_1^-(n_g)]/2$ and $\hbar(2\omega+\alpha) = [E_2^+(n_g) + E_2^-(n_g)]/2$[17]. Together with Eq. 3 and by neglecting the first-excited state charge dispersion (i.e. $\varepsilon_2 >> \varepsilon_1$) due to the aforementioned reasons, we arrive at $\delta\alpha(P,n_g) = P\varepsilon_2\cos(2\pi n_g)/2$.

***The Diabatic CZ Gate***

We consider a non-adiabatic, i.e. diabatic, CZ gate based on the two-qubit gate scheme using tunable couplers that was analyzed in Refs.[27-31] with similar schemes proposed in Refs.[32-35]. We show the circuit schematics of the tunable-coupler setup in Fig. 1. Here, the two computational transmons which we will refer to as Qubits 1 and 2 ($q_{1,2}$) are capacitively coupled with each other and to a third, frequency-tunable, transmon which is referred to as the tunable coupler or simply coupler (*c*). The introduction of the coupler enables on-demand gate operation between the two computational qubits.

Such a system can be modeled with the Hamiltonian[29,30],

$$\hat{H}/\hbar = \sum_{i\in\{q_1,c,q_2\}} \omega_i\hat{a}_i^\dagger\hat{a}_i + \frac{\alpha_i}{2}\hat{a}_i^\dagger\hat{a}_i^\dagger\hat{a}_i\hat{a}_i - \sum_{\substack{i,j\in\{q_1,c,q_2\}\\ i\neq j}} g_{ij}(\hat{a}_i^\dagger - \hat{a}_i)(\hat{a}_j^\dagger - \hat{a}_j). \tag{7}$$

The dependence of the transmon parameters on the parity and offset charge is not explicitly shown above for simplicity of notation. However, we note that the whole system has $2^3 = 8$ distinct parity states.

The main operation principle of the diabatic CZ gate is shown in Fig. 1. The goal is to use a frequency-tunable coupler to induce a full Rabi oscillation between the levels $|101\rangle \leftrightarrow |002\rangle$, so that the state $|101\rangle$ accumulates the correct conditional phase.

The CZ gate is implemented by tuning the frequency of the coupler via a flux pulse closer to the frequency of the computational transmons, so that the coupler frequency is a time dependent function $\omega_c(t)$. The couplings between the transmons $g_{ij} = \beta_{ij}\sqrt{\omega_i\omega_j}$ actually also depend on the frequencies, meaning that while $g_{q1q2}$ is constant, $g_{q1q2c}$ is also time dependent. The prefactors $\beta_{ij}$ depend on the coupling capacitances, as well as self-capacitances of the transmons in the lumped-element circuit model[29].

The computational basis in this scheme is formed by the *eigenstates* of the Hamiltonian from Eq. 7 in the idling configuration (defined in the following), rather than the local (uncoupled) transmon states[30]. Since the couplings act only as a perturbation to the uncoupled states, the maximum overlap rule can be used to identify the full Hamiltonian eigenstates corresponding to the uncoupled states. More specifically, the computational state $|ij\rangle$, $i,j \in \{0,1\}$ is the eigenstate $|\psi\rangle$ of the Hamiltonian in Eq. 7 which maximizes the overlap $|\langle\psi|i_{q_1}0_c j_{q2}\rangle|$.

This notation will be employed throughout this manuscript and we will omit the indices $g_{1,2}$ and c from now on. The kets with three indices (e.g. $|ijk\rangle$) will always denote the local (uncoupled) Fock states of the three-transmon system. The kets with only two indices (e.g. $|ij\rangle$) are used to denote the *eigenstates* of the whole system that are closest to the local (uncoupled) state $|i0j\rangle$.

We denote with $\omega_{ij}$ the angular frequency of the computational state $|ij\rangle$. In general, the state $|1l\rangle$ accumulates conditional phase with the rate

$$\zeta_{ZZ} = \omega_{11} - \omega_{01} - \omega_{10} + \omega_{00}. \tag{8}$$

However, since the coupler frequency is tunable, it is typically possible to find one or two frequencies $\omega_c$ for which $\zeta_{zz} = 0$[27,29,32]. These special frequencies will be referred to as the coupler idling frequencies and denoted with $\omega_c^{\text{idle}}$.

A variety of pulse shapes can be used to implement the gate effectively and without inducing too many unwanted transitions[27,30,43]. Even though our analytical analysis makes minimal assumptions about the pulse shape, we need to choose a specific form for the numerical simulations. In our simulations, we use the so-called flattop Gaussian pulse described by the following formula[27,44]

$$f(t) = \frac{1}{2}\left[\operatorname{erf}\left(\frac{t-\tau_b}{\sqrt{2}\sigma}\right) - \operatorname{erf}\left(\frac{t-\tau_b-\tau_c}{\sqrt{2}\sigma}\right)\right] - C. \tag{9}$$

The flattop Gaussian is obtained by a convolution of a step function with duration $\tau_c$ and a Gaussian with

parameter $\sigma$. The reasoning behind this choice is that the convolution of the flattop pulse with a Gaussian strongly suppresses the spectral component of the flattop pulse at higher frequencies, thus reducing the probability for unwanted transitions. An additional rise time of $\tau_b$ is also introduced, which we fix to $\tau_b = 2\sqrt{2}\sigma$ in the remainder of this work. Since any gate must have a finite duration, we introduce a cut-off at time $T = 2\tau_b + \tau_c$. The constant $C$ is then introduced to correct for the discontinuity at the beginning and the end of a pulse with finite duration.

Consequently, the coupler frequency during the gate operation is given by

$$\omega_c = \omega_c^{\text{idle}} + Af(t), \tag{10}$$

where A is the pulse amplitude. In the simulations, we optimize the pulse amplitude and duration $\tau_c$ such that the process fidelity of the gate is maximized.

***Effective Model***

The tunable coupler circuit Hamiltonian in Eq. 7 is difficult to analyze and we must typically rely on numerical studies[30]. It is therefore beneficial to introduce an effective Hamiltonian that can approximate the physics of the system. Similar to Refs.[29,45], we introduce the Schrieffer-Wolff transformation as a means to decouple the computational states from the coupler, and assume that the decoupled coupler remains in the ground state during the gate operations. In contrast to Refs.[29,45] who truncate the Hilbert space of the local transitions to two lowest-energy eigenstates, here we must also include the $|02\rangle$ state to account for the Rabi oscillation of the gate. More details of the transformation can be found in the Methods section.

Consequently, we consider here the truncated Hilbert space spanned by the states $\{|00\rangle, |01\rangle, |10\rangle, |11\rangle, |02\rangle\}$. In our analytical considerations, we thus neglect the possibility of leakage, which is a good assumption for high-fidelity gates. We emphasize that the leakage effects are included in our numerical simulations which have been made with the full Hamiltonian defined in Eq. 7. We additionally neglect the counter-rotating terms within the truncated Hilbert space and, thus, obtain the effective Hamiltonian

$$\hat{H}_{\text{eff}}/\hbar \hat{=} \begin{array}{c} \begin{array}{ccccc} |00\rangle & |01\rangle & |10\rangle & |11\rangle & |02\rangle \end{array} \\ \left(\begin{array}{ccc|cc} 0 & 0 & 0 & 0 & 0 \\ 0 & \tilde{\omega}_{q_2} & \tilde{g}_{01,10} & 0 & 0 \\ 0 & \tilde{g}_{01,10} & \tilde{\omega}_{q_1} & 0 & 0 \\ \hline 0 & 0 & 0 & \tilde{\omega}_{q_1} + \tilde{\omega}_{q_2} & \tilde{g}_{11,02} \\ 0 & 0 & 0 & \tilde{g}_{11,02} & 2\tilde{\omega}_{q_2} + \tilde{\alpha}_{q_2} \end{array}\right) \end{array} \begin{array}{c} |00\rangle \\ |01\rangle \\ |10\rangle \\ |11\rangle \\ |02\rangle \end{array} \tag{11}$$

where the parameters with the tilde denote the perturbed parameters of the original full Hamiltonian in Eq. 7. The perturbed parameters (the matrix elements of the Hamiltonian in Eq. 11) are derived in the Methods section (See Eqs. 35-38), the discussion in which is accurate up to second order in $g_{q_ic}/(\omega_{q_i} - \omega_c)$. Without the loss of generality, we have also assumed that the *f*-state of the *second* qubit ($q_2$) is used to perform the Rabi oscillation.

The pulse shape used to implement a diabatic CZ gate can typically be divided into three distinct stages: (i) fast sweep of the coupler frequency to an operation value close to the resonance with the qubits; (ii) long constant-frequency plateau at the operation frequency; (iii) fast sweep back to idling frequency of the coupler.

Since the plateau is typically longer compared to the fast sweeps[27], and the effective coupling strengths $\tilde{g}_{01,10}$ and $\tilde{g}_{11,02}$ are significantly smaller if the coupler is further detuned, we assume that the plateau stage is the only contributor to the dynamics and the effective Hamiltonian from Eq. 11 is constant in time. We show later that this approximation is valid for realistic gate durations close to 40 ns and longer. If this approximation cannot be made, the form of the effective Hamiltonian remains unchanged. However, the analytical results derived in the remainder of this section become more complex due to the time-dependency of the effective Hamiltonian.

The effective Hamiltonian in Eq. 11 is block-diagonal and, by exponentiating it, one can straightforwardly obtain an effective unitary time-evolution operator. Assuming that the computational transmons are detuned by approximately one anharmonicity, i.e. $\tilde{\omega}_1 - \tilde{\omega}_2 \approx \tilde{\alpha}_2$, the Rabi oscillation frequency between the single-excitation states $|01\rangle$ and $|10\rangle$ is lower than that of the transition between $|11\rangle$ and $|02\rangle$ because $|\tilde{\omega}_1 - \tilde{\omega}_2| >> \tilde{g}_{01,10}$. Thus, we can neglect the interaction between the single-excitation states.

Since we are interested in the operator acting on the computational subspace of the system, we will further truncate the subspace by excluding the non-computational $|02\rangle$ state.

After accounting for the single-qubit phases, which is typically done via virtual Z-rotations[46], the effective time-evolution operator $\hat{U}(t)$ is equivalent to

$$\hat{U}(t) \hat{=} \begin{pmatrix} 1 & 0 & 0 & 0 \\ 0 & 1 & 0 & 0 \\ 0 & 0 & 1 & 0 \\ 0 & 0 & 0 & \sqrt{P_{11}} e^{i\phi(t)} \end{pmatrix} \quad (\text{columns: } |00\rangle, |01\rangle, |10\rangle, |11\rangle;\ \text{rows: } |00\rangle, |01\rangle, |10\rangle, |11\rangle). \tag{12}$$

Here, we have defined the conditional phase $\phi(t)$ and the population of the $|11\rangle$ state $P_{11}$. Note that this operator is not necessarily trace-preserving, as part of the population of the $|11\rangle$ state might remain in the $|02\rangle$ state, due to potential calibration errors.

The equation for $P_{11}$ is obtained by again acknowledging the fact that the effective Hamiltonian in Eq. 11 is block-diagonal, and the analysis is therefore reduced to a standard two-level Rabi oscillation, with $P_{1l}$ being given by[47]

$$P_{11}(t) = 1 - \frac{2\tilde{g}_{11,02}^2}{\Omega^2}\left[1 - \cos(\Omega t)\right], \tag{13}$$

where we have defined the qubit-qubit detuning and the Rabi frequency of the transition $|11\rangle \leftrightarrow |02\rangle$ as $\tilde{\Delta} = \tilde{\omega}_{q1} - \tilde{\omega}_{q2}$ and $\Omega = \sqrt{(\tilde{\Delta} - \tilde{\alpha}_{q2})^2 + 4\tilde{g}_{11,02}^2}$, respectively. The formula for the conditional phase is less straightforward, as the single-excitation phases must be subtracted from the accumulated phase of the $|11\rangle$ state. Nonetheless, we readily obtain

$$\phi(t) = \frac{1}{2}\left[(\tilde{\alpha}_{q2} - \tilde{\Delta})t + \pi(1 - \text{sign}\{\cos(\Omega t/2)\})\right] + \arctan\left(\frac{\tilde{\Delta} - \tilde{\alpha}_{q2}}{\Omega}\tan(\Omega t/2)\right). \tag{14}$$

Eqs. 14 and 1 3 can be used to asses the susceptibility of the gate parameters to a small perturbation, such as a parity switch. Due to the larger charger dispersion of the *f*-state, and the fact that the *f*-state of Qubit 2 ($q_2$) is populated during the gate operation, we can assume that the main contribution of the parity switch is the perturbation of the anharmonicity $\alpha_{q2}$.

By treating the parity-dependent contribution to the anharmonicity $\delta\alpha$ from Eq. 2 as a small perturbation, we can obtain the parity-dependent expressions for the conditional phase and $|11\rangle$ population

$$\phi(t_g, P_{q2}) \approx \phi_0 + \left.\frac{\partial\phi}{\partial\alpha_{q2}}\right|_{t=t_g} \delta\alpha_{q2}(P_{q2}, n_g), \tag{15}$$

$$P_{11}(t_g, P_{q2}) \approx 1 + \left.\frac{1}{2}\frac{\partial^2 P_{11}}{\partial\alpha_{q2}^2}\right|_{t=t_g} \left[\delta\alpha_{q2}(P_{q2}, n_g)\right]^2, \tag{16}$$

where the Taylor expansion of the optimal gate parameters for a small perturbation of $\alpha_{q2}$ evaluated at the mean (parity averaged) anharmonicity $\alpha_{q2}$ from Eq. 2 was employed. The Taylor expansion performed here assumes that both parity states suffer from an error of the same magnitude (e.g. the error of the conditional phase for both parities has the same absolute value) and we will show in the remainder of the text that this assumption results in higher process fidelities of the gate. At this point, we stress again that $\delta\alpha(P, n_g) = P\varepsilon_2\cos(2\pi n_g)/2$.

While the above expressions are completely general also in the non-perturbative regime, the relations given in Eqs. 14 and 13 can be used to obtain analytical expressions for $\partial\phi/\partial\alpha_{q2}$ and $\partial^2 P_{11}/\partial\alpha_{q2}^2$.

We realize from Eq. 13 that the implementation of a high-fidelity gate with an arbitrary conditional phase $\phi_0$ requires $P_{11}(t_g) = 1$, otherwise some population remains outside of the computational subspace. From this observation we readily arrive to the condition for the gate time $\Omega t_g = n \cdot 2\pi$, in which $n \in \mathbb{N}$ is an integer number. This condition enables us to further simplify the relations for the susceptibility of the conditional phase to a parity switch, and we obtain up to the leading order,

$$\left.\frac{\partial\phi}{\partial\alpha_{q2}}\right|_{t=t_g} \approx \frac{t_g}{2\hbar}, \tag{17}$$

while

$$\left.\frac{\partial^2 P_{11}}{\partial \alpha_{q_2}^2}\right|_{t=t_g} \sim \mathcal{O}(g_{q_1c}^2 g_{q_2c}^2) + \mathcal{O}(g_{q_1q_2} g_{q_1c} g_{q_2c}). \quad (18)$$

In the derivation of Eq. 17 we have neglected the terms proportional to $g_{q_1c}g_{q_2c}/(\Delta_{q_2c} + \alpha_{q_2})^3$ and $g_{q_2c}^2/(\Delta_{q_2c} + \alpha_{q_2})^3$ and higher orders. Additionally Eq. 18 only contains the scaling of the result.

To summarize, the derived relations (equations 17 and 1 8) are therefore valid under the following assumptions:

1. The initial assumptions used to derive the effective Hamiltonian in Eq. 11 are valid, meaning that:

    (a) The second-order perturbation theory used for the Schrieffer-Wolff transformation is valid, i.e. $g_{q_2c}^2/(\omega_{q_2} - \omega_c)^2 \ll 1$.
    (b) The gate has low leakage outside of the considered subspace.
    (c) The rotating wave approximation for the counter-rotating coupling terms is justified.

2. The Rabi frequency associated with the $|01\rangle \leftrightarrow |10\rangle$ transition is much longer compared to the Rabi frequency of the $|11\rangle \leftrightarrow |02\rangle$ transition.
3. The coupler frequency in the interaction regime is relatively constant.
4. The gate has low leakage outside of the computational subspace.
5. The simplified formula in Eq. 17 additionally neglects the terms proportional to $g_{q_1c}g_{q_2c}/(\Delta_{q_2c} + \alpha_{q_2})^3$ and $g_{q_2c}^2/(\Delta_{q_2c} + \alpha_{q_2})^3$, and smaller.
6. We have assumed that the main contributor to the perturbation is the Qubit 2 ($q_2$) whose *f*-state is populated during the gate operation. However, if the system is designed in such a way that the charge dispersion of any of the other two transmons is significantly larger, their effects might not be negligible anymore.

Note that both assumptions about the leakage are automatically fulfilled if the gate has a high-fidelity.

**Gate Fidelity Limitations**

So far we have quantified how a parity switching event can affect the parameters of the gate unitary. In order to describe the gate performance in a quantum circuit, we also need to consider how frequent are parity switching events.

***Parity Switching Lifetimes***

Experiments of parity switching lifetimes typically show the parity switching time to lie in the broad range of $T_P \sim$ 100μs - 1s[42,48-52] Even though the parity switching lifetime of transmons might increase in the future, e.g. due to better design and improved shielding, it appears that the parity lifetime may be fundamentally upper bounded by the high-energy quasiparticle burst events, which are observed to happen once every 10 - 50 s[53-56].

***Kraus Operator Description***

Comparing the realistic range of parity lifetimes of superconducting qubits to the duration of a single two-qubit gate $t_g$, which is typically in the range of tens to hundreds of nanoseconds[27, 28,32,35,43], we observe that $t_g << T_P$. However, any meaningful application of a quantum computer will include re-running an algorithm, comprised of a large number of non-parallel gates $N_{\text{gates}}$, in order to reduce the statistical uncertainty of the observable being evaluated. Denoting the number of runs by $N_{\text{shots}}$, the uncertainty of any observable generally scales as $1/\sqrt{N_{\text{shots}}}$[47] and therefore $N_{\text{shots}}$ must be large. All together, the time needed to execute a full algorithm $T_{\text{alg}}$ roughly scales as $T_{\text{alg}} \propto N_{\text{shots}} \cdot N_{\text{gates}} \cdot t_g$, but it may be realistically even longer, due to the time needed to measure and reinitialize the quantum computer, and any possible pulse schedule compilation of the control electronics[57].

As an example, in Refs.[6,8] the state of the art devices were run for a total of several minutes in order to obtain meaningful results. This enables us to see that there is a clear separation of timescales

$$t_g \ll T_P \ll T_{\mathrm{alg}}. \tag{19}$$

The left side of Eq. 19 indicates that the probability for a parity switch occurring during the operation of a single gate is very low, while the right-hand side suggests that a large number of parity switches can occur during an execution of an algorithm. This means that the effect of the parity switch can be described by the following Kraus operators[58] acting on the two-qubit density matrix $\hat{\rho}$

$$\mathrm{CPHASE}_P[\hat{\rho}] = \hat{U}_- \hat{\rho} \hat{U}_-^\dagger + \hat{U}_+ \hat{\rho} \hat{U}_+^\dagger, \tag{20}$$

where $\hat{U}\pm$ are Kraus operators corresponding to the different parity implementation of the two-qubit gate. Eq. 20 can be interpreted as a stochastic application of two different gate operators; by assuming that the target conditional phase is $\phi_0$, they can be written as

$$\hat{U}_\pm(t) = \frac{1}{\sqrt{2}} \begin{pmatrix} 1 & 0 & 0 & 0 \\ 0 & 1 & 0 & 0 \\ 0 & 0 & 1 & 0 \\ 0 & 0 & 0 & \sqrt{1 - \frac{\delta P_{11}}{4}}\, e^{i\phi_0 \pm i \frac{\delta\phi}{2}} \end{pmatrix}, \tag{21}$$

with $\delta\phi = \partial\phi / \partial\alpha_{q_2}\, \varepsilon_2^{q_2} \cos(2\pi n_g^{q_2})$ and $\delta P_{11} = \partial^2 P_{11} / \partial\alpha_{q_2}^2\, \left[\varepsilon_2^{q_2} \cos(2\pi n_g^{q_2})\right]^2 / 2$, which is a result of Eqs. 15 and 1 6, together with $\delta\alpha(P, n_g) = P\varepsilon_2 \cos(2\pi n_g)/2$. We have additionally assumed that both parities are equally likely, however this assumption can also be easily relaxed.

We have defined the Kraus operators in Eq. 21 so that there are small errors associated with each parity state. We show in the following that this corresponds to higher process fidelities, compared to having one parity state with a perfect fidelity and the second parity state with a larger error. This assumption is therefore is equivalent to optimally calibrating the gate.

### *Gate Fidelity*

Using the Kraus operator description in Eq. 21, allows us to make a formal analysis of performance metrics of an arbitrary conditional phase gate in the presence of parity switches and resulting phase and leakage errors.

The process fidelity $\mathscr{F}$ can be computed by[59,60]

$$\mathscr{F}[\mathrm{CPHASE}_P] = \frac{\frac{1}{d}\sum_{i=+,-} \left| \mathrm{tr}\left\{ \hat{U}_{\mathrm{CPHASE}}^\dagger \hat{U}_i \right\} \right|^2 + 1 - L}{d+1}, \tag{22}$$

with the leakage parameter $L = 1 - \mathrm{tr}\left\{ \hat{U}_{\mathrm{CPHASE}}^\dagger \left[ \sum_{i=+,-} \hat{U}_i \hat{U}_i^\dagger \right] \hat{U}_{\mathrm{CPHASE}} \right\} / d.$ Here $\hat{U}_{\mathrm{CPHASE}}$ is the unitary operator of an ideal CPHASE gate and $d$ is the dimension of the computational Hilbert space, which in our case is $d = 4$.

The infidelity $1 - \mathscr{F}$ of the operation given in Eq. 20 for small perturbations $\delta\phi$ and $\delta P_{11}$ is given by the following expression

$$\mathscr{F} \approx 1 - \frac{3}{80} \left[ \frac{\partial\phi}{\partial\alpha_{q_2}}\bigg|_{t=t_g} \varepsilon_2^{q_2} \cos(2\pi n_g^{q_2}) \right]^2 + \frac{1}{32} \frac{\partial^2 P_{11}}{\partial\alpha_{q_2}^2}\bigg|_{t=t_g} \left[\varepsilon_2^{q_2} \cos(2\pi n_g^{q_2})\right]^2. \tag{23}$$

Here, we observe that it is clear that the effect on the fidelity is of the second-order in the charge dispersion, due to the coherent nature of a conditional phase error. However, we have shown in Eq. 40 of the Methods section that the infidelity of a series of $N$ gates is given by $1 - \mathscr{F}_N \approx N(1 - \mathscr{F})$. This indicates that the error scales linearly with the number of gates, as is typical of incoherent errors, but quadratically in the error parameter $\delta\phi$, as is expected from a coherent error[61,62].

If the gate is not calibrated so that the error is equally distributed between the two parities, the form of Eq. 40 remains the same, however the numerical prefactor in front of both terms (3/80 and 1/32) is increased.

We conclude from Eq. 23, together with Eqs. 17 and 18, that the dominant effect of the parity switch event is the shift in the conditional phase, rather than leakage, since $(\partial\phi/\partial\alpha_{q2})^2 \gg \partial^2 P_{11}/\partial\alpha_{q2}^2$. Moreover the magnitude of the shift in conditional phase is given by Eq. 15 and Eq. 17. Further simplifying Eq. 40 therefore results in

$$1-\mathscr{F} \approx \frac{3}{80}\left[\varepsilon_2^{q2} t_g \cos(2\pi n_g^{q2})/\hbar\right]^2. \quad (24)$$

**Numerical experiments**

Here, we compare the above results with the numerically exact treatment of full the Hamiltonian in Eq. 7. The parity switch effect is taken into account in the numerical experiments by considering the transmon Hamiltonian from Eq. 2. In other words, the system is simulated for all $2^3 = 8$ possible parity states and the results accordingly averaged.

According to Eq. 3, the magnitude of the effect also depends on the offset voltage of Qubit 2, which is typically not known. Thus, we assume for simplicity that $n_g^{q2} = 0$. Alternatively, as long as all the effects remain second order in the charge dispersion, one can also define an average charge dispersion as $\bar{\varepsilon}_2^{q2} = \varepsilon_2^{q2}\sqrt{\int_0^1 \mathrm{d}n_g \cos^2(2\pi n_g)} = \varepsilon_2^{q2}/\sqrt{2}$.

***Parity Switch Induced Gate Errors***

In order to perform high-fidelity gate simulations, the Hamiltonian parameters in Eq. 7 should be chosen carefully. In order to be able to vary the ratio of $E_J/E_C$ of Qubit 2 ($g_2$), and simultaneously achieve high performance, we describe here how the parameters in Table 2 are chosen. In general, we use parameters that closely resemble those in the implementation presented in Ref.[27].

Here, we examine the effect on the fidelity of a CZ gate and compare the perturbative results to a full simulation including also the coupler transmon. The full numerical treatment includes also the ramping up and down of the pulse, as described in Eq. 9. The pulse parameters in Eq. 9 are set to $\tau_b = 2\sqrt{2}\sigma$ with $\sigma = 5$ ns, and the amplitude of the pulse A and $\tau_c$ are optimized such that the gate fidelity is maximal. More details about the numerical simulations are given in Ref.[31]. The parity of the whole system is then switched from one state to the other according to charge dispersion given by Eqs. 3 and 4.

Since in our analytical approach we approximate the realistic pulse shape shown in Eq. 9 with a square pulse (i.e. we neglect any dynamics during the ramping up and down of the flux pulse), we have to be careful when comparing the results to those obtained with the numerical data. Particularly, the pulse duration $T$ in the numerics is in general different than the gate duration $t_g$ we have defined in our analytic derivation. If we compare our analytical results with numerical simulations, we first extract the number $n$ of Rabi oscillations from the simulated data by monitoring the population of the $|002\rangle$ state during the gate operation. After $n$ is determined, the analytical gate time is adjusted such that $t_g = n\pi/\Omega$. The effective gate time obtained in this manner does not differ significantly from the duration of the flat part of the pulse, typically less than 5 ns.

We examine the validity of the formula for shift in the conditional phase derived in Eq. 17 by comparing the predictions to a full numerical simulation. The conditional phase of the gate in the simulations is obtained from propagating the state $|\psi(t=0)\rangle = \frac{1}{2}(1,1,1,1)^{\mathrm{T}}$ and extracting the conditional phase of the $|11\rangle$ state. Fig. 2(a) compares the analytical results in Eqs. 17 and 15 to the numerically obtained values and confirms that the two approaches agree up to a good accuracy. Since the magnitude of the charge dispersion in the numerical analysis is the same as in the analytical treatment, the error stems completely from the approximations made in evaluating $\partial\phi/\partial\alpha_{q2}$. Furthermore, Fig. 2(a) also clearly shows that the parity-switching-induced shift in the conditional phase scales exponentially with the ratio of $E_J/E_C$. This, in turn, is due to the scaling of the charge dispersion in Eq. 4.

In Fig. 2(b), we show numerical data of the full gate fidelity after the parity switch and, as a comparison, the corresponding analytical result calculated using Eq. 24. The process fidelity in the numerical example is obtained from propagating a number of input states, reconstructing the effective superoperator of the gate from these simulations and subsequently using Eq. 22 to obtain the process fidelity of the gate. We observe that the infidelity of the numerical simulation flattens for $E_J/E_C \gtrsim 75$, which is due to other errors in the gate implementation, such as leakage transitions during the pulse ramping up and down. In this region (in grey) the effect of a parity switch is not seen since it is simply too small compared to other errors. On the other hand at lower values of $E_J/E_C$, the numerical results overlap with the parity switching error predicted by the shift in the conditional phase. While clearly demonstrating the magnitude of the error, this result also shows that the leakage error contribution in Eq. 23 is negligible in the perturbative regime. The gate durations in Fig. 2 are typically 45 ns $\lesssim t_g \lesssim$ 60 ns, with $\tau_c \sim t_g$.

Additionally, Fig. 2(b) compares the magnitude of the error due to quasiparticle related decoherence to the parity switch induced error described in this work. Since the quasiparticle induced characteristic decay times $T_1$ and $T_\phi$ depend on a large number of parameters and there are two possible quasiparticle generating mechanisms [see Fig. 1 (b)][11], we only provide an upper bound based on the parity switching time observed in the references cited in the caption of Fig. 2. This upper bound is determined by noting that in the computational subspace[50]

$$\Gamma_{00}^{+-} + \Gamma_{11}^{+-} + \Gamma_{01}^{+-} + \Gamma_{10}^{+-} \approx 2/T_P, \tag{25}$$

where the rates $\Gamma_{ij}^{+-}$ represent the transition rates between states $|i^\pm\rangle \rightarrow |j^\pm\rangle$ in different parity manifolds. Since amplitude damping noise has a larger effect on the infidelity compared to pure dephasing (see Table 1), we furthermore assume the worst-case scenario in which each quasiparticle parity switching event produces a $T_1$ decay, so that $1/T_1^{qp} = \Gamma_{01}^{+-} + \Gamma_{10}^{+-} \approx 2/T_P$.

This expression for $T_1^{qp}$, together with experimentally measured values of $T_P$, provides an approximate upper bound for the magnitude of the effect of the decoherence. Even though each green line in Fig. 2(b) uses a constant measured $T_P$, independent of $E_J/E_C$, the plotted infidelity contribution is not constant due to the varying gate duration $T = 2\tau_b, + \tau_c$.

Very interestingly we observe from Fig. 2(b) that depending on the ratio of $E_J/E_C$ and the parity lifetimes $T_P$, the contribution of parity switching to the infidelity of the two-qubit gate system can strongly dominate over the contribution from quasiparticle-induced relaxation. Note that the two-qubit gates are typically the noisiest building blocks of a quantum algorithm[6,7,10,61].

We have also provided additional numerical results in the Supplementary Information, showing that the effect of a parity switch on the leakage becomes the main contribution to the infidelity at shorter gate times.

### *Idling Interaction*

One of the main benefits of the tunable coupler architecture is the ability to also suppress any residual interactions between the qubits during idling[29,30,38], with unwanted ZZ coupling strengths demonstrated to be below 1 kHz[27]. Here, we show that an uncontrolled parity switching event sets a lower bound on the minimum achievable unwanted ZZ interaction in such systems.

While the conditional phase during the gate operation is obtained by transferring the population outside of the computational subspace, the residual interactions during the idling period are a consequence of dispersive shifts of the energy levels of the computational states, as described in Eq. 8. However, in the presence of parity switches in all three transmons of the tunable-coupler setup, the ZZ-coupling rate can be tuned to *exactly* zero only for one of the eight equally likely parities. By distributing the errors equally across all parities and assuming the charge dispersions are small, the idling coupling strength (depending on the three individual parities) can be written as

$$\zeta_{ZZ}(P_{q_1}, P_c, P_{q_2}) \simeq \sum_{i \in \{q_1, c, q_2\}} \frac{P_i}{2} \left( \frac{\partial \zeta_{ZZ}}{\partial \alpha_i} \varepsilon_2^i + \frac{\partial \zeta_{ZZ}}{\partial \omega_i} \varepsilon_1^i \right), \tag{26}$$

with $P_i \in \{-1,+1\} \forall i$, and the derivatives are evaluated at the idling point. While we have still assumed $\varepsilon_2 \gg \varepsilon_1$, we have also acknowledged that the first excited state charge dispersion and the derivatives $\partial\zeta_{zz}/\partial\omega_i$ can in some cases be significantly larger compared to $\partial\zeta_{ZZ}/\partial\alpha_i$. Unlike the gate fidelity results, the above expression is first order in the charge dispersion.

However, in order to evaluate the derivatives in Eq. 26, or the general value of $\zeta_{zz}$, it is necessary to go to fourth-order perturbation theory in the coupling strengths, as was done in Refs.[27,30]. While the complete fourth-order expression is impractical for obtaining any analytical insight, by further assuming the hierarchy of the system parameters $\Sigma_{ic} >> \Delta_{ic} >> g_{ic} >> g_{12}$, where $\Sigma_{ij} = \omega_i + \omega_j$ and $\Delta_{ij} = \omega_i - \omega_j$, for $i,j \in \{q_1, c, q_2\}$, the cumbersome expressions can be significantly simplified into[30]

$$\zeta_{ZZ} \approx \frac{2\left[(\alpha_{q_1} + \alpha_{q_2})\tilde{g}_{01,10}^2 - 2\nu\tilde{g}_{01,10}(2\alpha_{q_1}\alpha_{q_2} + (\alpha_{q_1} - \alpha_{q_2})\Delta_{q_1q_2})\right]}{(\Delta_{q_1q_2} + \alpha_{q_1})(\Delta_{q_1q_2} - \alpha_{q_2})} + 2\nu^2\left[4\alpha_c + \frac{(\alpha_{q_1} + \alpha_{q_2})\Delta_{q_1q_2}^2}{(\Delta_{q_1q_2} + \alpha_{q_1})(\Delta_{q_1q_2} - \alpha_{q_2})}\right], \tag{27}$$

where $v = g_{q_1c}g_{q_2c}/(2\Delta_{q_1c}\Delta_{q_2c}) \sim 10^{-3}$.

The difference between the derivatives obtained from Eq. 27 and the numerically exact result is shown in Fig. 3(a) from which we observe that a qualitatively good agreement can be found in the vicinity of the two idling frequencies of the system (vertical black dotted lines). We therefore evaluate the error between the analytical formulas and the numerically exact expression in more detail below.

Since the system has eight uncontrolled, rapidly (compared to experimental timescales, as in Eq. 19) switching parity states, we define a parity-averaged idling interaction strength by averaging over all parities:

$$\sqrt{\langle \zeta_{ZZ}^2 \rangle_P} = \sqrt{\frac{1}{2^3} \sum_{P_{q_1}, P_c, P_{q_2} \in \{-1,+1\}} [\zeta_{ZZ}(P_{q_1}, P_c, P_{q_2})]^2}. \tag{28}$$

This definition is essentially the root-mean-square of the idling ZZ strength defined in Eq. 26. Parity-averaged coupling strengths are shown in Fig. 3(b), where we observe a good agreement between the analytical result and the numerical data. The possible values of the quantity $\zeta_{zz}(P_{q1}, P_c, P_{q2})$ for the third data point [also shown in panel (a)] are visualized in the bar graph. The bar graph clearly demonstrates that Qubit 2 ($q_2$) is the dominant contributor to the perturbation, with small corrections due to the parity of Qubit 1 ($q_1$). The parity of the coupler in this set of parameters is largely irrelevant due to the high ratio of $E_{J_c}/E_{C_c} \approx 250$, but this is not always the case. For example, considering the gate implementation from Ref.[32], the ratio of $E_{J_c}/E_{C_c}$ for the coupler is much smaller and therefore, the coupler parity in this implementation has a much larger effect on the strength of the residual ZZ coupling.

The above results therefore present a fundamental limit on the magnitude of unwanted interactions that can be achieved in the tunable coupler architecture. However, the overall effect on an algorithm is more complex as it depends on the duration of the execution (since the interaction is always "on"), which in turn depends on the coherence times. We estimate that this error becomes relevant if the coherence times are of the order of $1/\sqrt{\langle \zeta_{ZZ}^2 \rangle_P}$, since a significant *unwanted* conditional phase is accumulated if the algorithm duration $\Delta T$ (which is determined by the coherence times) is long enough such that $\Delta T \cdot \sqrt{\langle \zeta_{ZZ}^2 \rangle_P} \sim 1$. For $E_J/E_C \sim 50$, the coherence time (or algorithm duration) needed to observe the parity switching induced residual coupling strength is on the order of 1 ms. Note that current fabrication processes are indeed already approaching this value[39-40].

### *Optimal Qubit Parameters*

Having established the magnitude of the parity-induced error on a two-qubit gate, we have shown that this error can be mitigated by increasing the $E_J/E_C$ ratio of the transmon. However, there are other error sources present in such architectures[31], and increasing the $E_J/E_C$ ratio might suppress the parity-switching errors but increase the contribution of other possible error sources. Therefore, in order to find better parameters for future transmon-based quantum computers, we must evaluate the contributions of all errors affecting the system. In particular, we estimate optimal regions for the qubit parameters $E_J$ and $E_C$, where the errors contributing to the gate and state preparation infidelities are minimized.

We consider a number of different error sources relevant to superconducting qubits:

1. $T_1$ decay due to the coupling to a bath of two-level systems[63-69].

2. $T_\phi$ pure dephasing due to coupling to magnetic flux noise[63,70-72].

3. Leakage affecting single-qubit gates due to low anharmonicity[73].

4. State preparation errors due to finite-temperature heating effects[74-76], without the presence of active reset.

5. Errors in the two-qubit gate operation due to parity switch effects, that are analyzed in this manuscript.

In Methods, we show how the above error sources scale with the transmon Hamiltonian parameters $E_J$ and $E_C$. We have not included any errors related to the control and calibration of the individual gates, as such errors do not explicitly depend on the qubit parameters and their inclusion, therefore, would not significantly alter the presented results. In other words, we assume that perfect control and calibration are possible. Similarly, measurement errors are present, but have no explicit dependence on $E_J$ and $E_C$.

**Table 1.** Scaling analysis for the most relevant error sources in an architecture of flux-tunable transmons with tunable couplers.

| | Parameter scaling | Single-qubit infidelity | Two-qubit infidelity |
|---|---|---|---|
| Charge noise ($T_1$) | $\Gamma_1 = \frac{1}{T_1} \propto E_C^{3/2} E_J^{1/2}$ | $\frac{1}{3}\Gamma_1 t_{SQG}$ | $\frac{2}{5}(\Gamma_1^{q_1} + \Gamma_1^{q_2}) t_{TQG}$ |
| Flux noise ($T_\phi$) | $\Gamma_\phi = \frac{1}{T_\phi} \propto E_C E_J$ | $\frac{1}{6}\Gamma_\phi t_{SQG}$ | $\frac{1}{5}(\Gamma_\phi^{q_1} + \Gamma_\phi^{q_2}) t_{TQG}$ |
| Leakage | $P_{leak.} \propto E_C^{-\gamma}, 5 \lesssim \gamma \lesssim 6$ | $\frac{1}{3}P_{leak.}$ | / |
| Parity Switch | $(\delta\phi)^2 \propto e^{-2\sqrt{8E_J/E_C}} E_C^{1/2} E_J^{7/2}$ | / | $\frac{3}{80}\left(\frac{t_{TQG}}{2}\varepsilon_2^{q_2}\right)^2$ |
| Thermal excitation | $P_{\|1\rangle}/P_{\|0\rangle} = e^{-\beta(\sqrt{8E_J E_C} - E_C)}$ | $P_{\|1\rangle}$ | / |

For simplicity, we will again start by considering the same tunable coupler system as in the previous section, but arranged in a square grid, as pictured in Fig. 4(a). In order to avoid frequency crowding issues with such a connectivity[77], we only need to consider two different computational transmons with two different fequencies. In this case, it is therefore sufficient to consider only two qubits with different parameters. Moreover, we will assume that the qubits are always detuned by approximately one anharmonicity and the anharmonicity of the qubits is similar. We have found that these two conditions are sufficient for us to be able to perform high-fidelity two-qubit gates, as described in Table 2. Since the parameters of the transmons are related by this condition, we can parametrize the whole system in terms of $E_J$ and $E_C$, of the higher-frequency transmon. Some examples of these parameter values that were obtained from experimental demonstrations of the diabatic CZ gate are plotted in Fig. 4(b).

In order to quantify the performance of an algorithm execution with a specified pair of parameters $E_J$ and $E_C$ in mind, we define a cost function in the form of a weighted sum of the infidelity contributions of all the relevant errors listed in Table 1. This sum can be written as

$$C = \sum_{i=T_1,T_\phi,\text{parity}} w_{TQG,i}(1-\mathscr{F}_{TQG,i}) + \sum_{i=q_1,q_2}\sum_{j=T_1,T_\phi,\text{leak.}} w_{SQG,i,j}(1-\mathscr{F}_{SQG,i,j}) + \sum_{i=q_1,q_2} w_{SP,i}(1-\mathscr{F}_{SP,i}) \quad (29)$$

where the summation runs across all infidelity contributions, or more explicitly

$$\begin{aligned} C = {} & \frac{2}{5}(\Gamma_1^{q_1} + \Gamma_1^{q_2})t_{TQG} + \frac{1}{5}(\Gamma_\phi^{q_1} + \Gamma_\phi^{q_2})t_{TQG} + \frac{3}{80}\left(\frac{t_{TQG}}{2}\varepsilon_2^{q_2}\right)^2 \\ & + 2\left[\frac{1}{3}\Gamma_1^{q_1} t_{SQG} + \frac{1}{6}\Gamma_\phi^{q_1} t_{SQG}\right] + \frac{1}{3}P_{leak.}^{q_1} + 2\left[\frac{1}{3}\Gamma_1^{q_2} t_{SQG} + \frac{1}{6}\Gamma_\phi^{q_2} t_{SQG}\right] + \frac{1}{3}P_{leak.}^{q_2} \\ & + \left[\frac{10(t_{TQG} + 2t_{SQG})}{T_{1,0}}\right]\left(P_{|1\rangle}^{q_1} + P_{|1\rangle}^{q_2}\right). \end{aligned} \quad (30)$$

The first term in Eq. 29 and first line in Eq. 30 correspond to the errors of the two-qubit gate, the second term and line to single-qubit gate errors and the last to the state preparation error.

A similar fidelity approximator was defined in Ref.[6]. We have introduced additional weights in the sum, in order to account for the relative number of single and two-qubit gates, and also to correctly take into account the fact that the error in state preparation occurs only once, while the gate error is significantly amplified after a number of applications of the operation. Since only the relative values of the weights $w_{i,j}$ are relevant, we normalize so that we assume that one two-qubit gate is applied, meaning that all error terms related to the two-qubit gate have weights $w_{TQG} = 1$. As pictured in Fig. 4(c), we will analyze a circuit where we perform four single-qubit gates per each two-qubit gate, with half those single-qubit gates being $\pi$ rotations which are more susceptible to leakage. Note that this ratio of single to two-qubit gates arises naturally with the introduction of randomized compiling into the algorithm[61]. The weights $w_{SQG,T_{1,\phi}}$ for the decoherence induced infidelity during a single-qubit gate therefore have a weight of 2 (since a $\pi$ and $\pi/2$ rotation are applied) per qubit, while the leakage error $w_{SQG,leak.} = 1$ per each qubit. Lastly, the thermal state preparation error is weighted so that $w_{SP} = 10(t_{TQG} + 2t_{SQG})/T_{1,0}$, since this quantity is the inverse of the approximate number of single and two-qubit gates that we can perform within a specified coherence time $T_{1,0}$.

The values of the cost function from Eq. 30 for certain parameters are plotted in Fig. 4(d). Due to the fact, that the minimum of $C$ is an optimal solution only for the circuit pictured in Fig. 4(c), we have plotted an optimal region of parameters. This optimal region is also contrasted with the optimal region obtained with a density matrix simulation of the same circuit, and the good agreement with between the curves shows that $C$ is a valid performance metric.

The color scale corresponding to the performance metric $C$ has four distinct regions in which the performance is poor, corresponding to the error sources in Table 1. For small $E_C$ and, consequently, low anharmonicity $\alpha_{q2}$, the overall fidelities are low due to relatively large errors caused by leakage during single-qubit gates. For small $E_J$ and large $E_C$, $E_J/E_C$ has a low value and therefore the system experiences relatively large errors arising from parity switching events. If both $E_J$ and $E_C$ are large, the coherence times are short and, therefore, the dominating source of infidelity. Moving perpendicularly to the constant frequency contours towards lower values of $E_C$ and $E_J$, results in lowered frequency and, thus increased errors caused by thermal excitations.

On the other hand, when considering near-future transmons with coherence times close to 0.5 ms[39,40] in Fig. 4(d), we observe that the optimal region is shifted significantly towards larger values of $E_C$, and is even limited by the parity-switching effects in the bottom right corner, thus demonstrating the importance of this effect in future QPU design, when two-qubit gate infidelities surpass the limitof $10^{-3}$ infidelity.

By comparing the data in Fig. 4(b) and (d), we observe that the implementation by Xu, H., *et al.* (2021)[28] is close to the parity-switching induced error region. Since the pure dephasing times of the system were not reported we are not able to asses the relative contribution of the parity switching error to this gate implementation. However, using the results shown in Eqs. 23 and 17, we observe that the parity-switching-error induced infidelity for the parameters is estimated to be $1 - \mathscr{F} \approx 2 \cdot 10^{-3}$. As a comparison, the reported $\Gamma_1$ decay times (measured in the idling configuration) in the reference were $\Gamma_1^{q1} = 20.8\,\mu s$ and $\Gamma_1^{q2} = 28.8\,\mu s$[28]. Together with the reported gate time, these decay times correspond to an infidelity contribution of approximately $6 \cdot 10^{-4}$, as given by the expression in Table 1. These results show that for this specific implementation of the diabatic CZ gate, the described effects of the parity switches are comparable, and possibly even greater than the $T_1$ decay induced infidelity.

The shifts of the optimal region with increasing coherence times seen in Fig. 4(d) mean that the qubit parameters must be adapted to the currently achievable coherence times. Fig. 5(a) shows how the weighted infidelity $C$ decreases with the achievable coherence properties of the system, provided that the parameters $E_J$ and $E_C$ are adapted to the coherence times. On the other hand, Fig. 5(b) displays the value of the function $C$ without changing $E_J$ and $E_C$. Even though both infidelities $C$ on panels (a) and (b) were largely coherence limited initially, the fixed parameters in 5(b) show that it is not necessary that we will achieve better fidelities just by increasing coherence times, without taking into account the effects of other errors. In this case, the parity switching error becomes the dominant error source, as seen from the upper panel in Fig. 5(b).

It is also important to mention what other aspects of successfully operating a transmon tunable coupler based quantum computer were not included in the presented analysis.

- We are neglecting any possible cross-talk effects between next-nearest neighbors.
- Idling errors were discussed in this work, but not included in this analysis, as their contribution depends significantly on the specific algorithm being implemented. Taking also this effect into account, the area with low $E_J/E_C$ will be even less favorable.
- Other sources of decoherence are expected to have smaller contributions and therefore do not significantly affect the findings presented here.
- The TLS environment is random, meaning that the scaling shown in Table 1 only holds for the average of a large number of qubits. Additionally, the $T_1$ decay rate is also heavily influenced by the design, i.e., the exact geometry of the capacitor pads of the transmon, meaning that the presented results are only valid for a comparison of qubits with similar designs.
- Recently, two-qubit gates with tunable couplers idled below the qubit frequencies have been demonstrated[32,33]. In such implementations, the presence of thermal coupler excitations limit the gate performance at lower qubit frequencies in a more complex manner. Our analysis in the low frequency regime therefore only holds for the original tunable coupler proposals, where the coupler is idled above the computational transmons.

## Discussion

We believe that the provided framework for the optimization of circuit parameters will serve as a guideline in the future design of transmon-based quantum computers. Our results demonstrate that there is a clear global performance maximum in the $E_J$ and Ec landscape, which was not identified before. Moreover, the procedure can be straightforwardly extended to more error sources, as long as we have analytical insight into the scaling of the error or we are able to numerically evaluate the infidelity contribution. The latter is typically realistic as long as the error is sufficiently local, i.e. it depends only on the parameters of a handful of transmons at most. Moreover, while we have based our analysis on transmon qubits connected via tunable couplers, the same principles, albeit with different error sources, can be applied to different types of qubits[1] or co-design chips[78]. Additionally, more parameters than just $E_J$ and $E_C$ can be optimized, for example also the gate durations can be considered as free parameters since they are realistically easily tunable in experiment. The limiting factor here are again the errors where we have no analytical insight and the numerical interpolation might prove to be too demanding in a large parameter space.

Additionally, we have also established, both analytically and numerically, the effects of parity switching on the commonly implemented tunable coupler mediated diabatic CZ gate in a transmon based quantum computer, and we have shown that the parity switching error can be the main quasiparticle-related error source of the two-qubit gate. Moreover, we have demonstrated that the experimental implementation of the gate presented in Ref.[28] may have a comparable, if not larger contribution of parity-switching errors compared to all $T_1$ decay mechanisms.

While the tunable-coupler-based diabatic CZ gate is more relevant due to its implementation in leading large-scale experiments[6,7,9,10], we believe that the effects described in this manuscript should be considered in any current or future transmon-based quantum gate which utilizes higher-excited states.

Moreover, while one of the main expected benefits of introducing tunable couplers into the system is the possibility to completely suppress any unwanted ZZ-type interaction between the qubits, we have demonstrated that the stochastic nature of the parity switches constrains that statement, meaning that practically the achievable minimal coupling strength is lower-bounded. The magnitude of this "always on" interaction should be an important consideration, if we want to run longer algorithms. More specifically, it becomes relevant when the algorithm is long enough to accumulate a considerable conditional phase due to the unwanted coupling strengths plotted in Fig. 3(b). Since current coherence times are approaching the 1 ms limit[39,40], the residual idling strength can become relevant if the described effects are not taken into account in the choice of the transmon parameters.

One way of mitigating the parity switching effect would be to tune the offset charge to the point where both parity manifolds are degenerate, i.e. $\cos(2\pi n_g) = 0$, however such a solution is not practical, since the charge noise in the environment results in a drift of the offset charge $n_g$ over longer timescales, as was demonstrated in Refs.[79,80]. Additionally, at the point where $\cos(2\pi n_g) = 0$, the differential charge dispersion of the transmon is maximal, meaning that the coherence properties of the transmon due to slowly fluctuating charge noise are reduced[5].

## Methods

### The Schrieffer-Wolff Transformation

The Schrieffer-Wolff (SW) transformation used in this manuscript was first introduced in Ref.[81] and a similar transformation has been applied to the computational subspace of the two-qubit system in Refs.[29,45]. The aim of the SW transformation in our case is not to diagonalize the system, but rather to decouple the coupler states from the computational transmons, thus enabling us to only study the reduced system, i.e. we want to simplify the full Hamiltonian into a more tractable reduced model, containing only the relevant states (i.e. the states which have a significant population).

The reason for this is the fact that the computational basis of the system is defined by the eigenstates of the system which have the maximum overlap with states of the form $|i_{q1} 0_c j_{q2}\rangle$, i.e. with the coupler always in the ground state. Any excitations of the coupler therefore lead to errors, so in order to analyze the ideal gate dynamics, we constrain ourselves only to the energy levels of the computational subspace and the second excited state used in the Rabi oscillation during the CZ gate operation.

In general, a SW transformation is obtained by noting that any unitary operator can be written as

$$\hat{U} = e^{\hat{S}} = \mathbb{1} + \hat{S} + \tfrac{1}{2}\hat{S}^2 + \dots$$

, where $\hat{S}$ is anti-hermitian, $\hat{S} = -\hat{S}^\dagger$. Consequently a unitary transformation of an arbitrary Hamiltonian $\hat{H}$ can be expanded in terms of $\hat{S}$ as

$$\hat{U}\hat{H}\hat{U}^\dagger = \hat{H} + [\hat{S},\hat{H}] + \frac{1}{2}[\hat{S},[\hat{S},\hat{H}]] + \mathcal{O}(\hat{S}^3). \tag{31}$$

As is typical in perturbation theory, we introduce the index a for bookkeeping purposes, and split the full Hamiltonian into a diagonal part and two off-diagonal perturbations, so that $\hat{H} = \hat{H}_0 + \alpha\hat{V}_1 + \alpha\hat{V}_2$. Additionally we rewrite the operator $\hat{S}$ as a first order operator $\hat{S} \to \alpha\hat{S}$, since if the perturbation is small, $\hat{U}$ should be close to identity. In our case, $\hat{H}$ is given in Eq. 7 and the first-order perturbation $\hat{V}_1 = -\sum_{i=q_1,q_2} g_{ic}(\hat{a}_i^\dagger - \hat{a}_i)(\hat{a}_c^\dagger - \hat{a}_c)$ corresponds to the capacitive couplings of the computational (Qubits 1 and 2, $q_{1,2}$) transmons to the coupler (c), the direct coupling between the qubits $\hat{V}_2 = -g_{q_1q_2}(\hat{a}_{q_1}^\dagger - \hat{a}_{q_1})(\hat{a}_{q_2}^\dagger - \hat{a}_{q_2})$ is a second-order perturbation, while $\hat{H}_0$ is a sum of the three independent anharmonic oscillator Hamiltonians. This hierarchy is chosen due to the fact that in all practical scenarios $g_{q1q2} << g_{q1c}, g_{q2c}$.

By plugging the ansaetze into Eq. 3 1, and grouping the terms with the same order of $\alpha$, we obtain

$$\hat{U}\hat{H}\hat{U}^\dagger = \hat{H}_0 + \alpha\left(\hat{V}_1 + [\hat{S},\hat{H}_0]\right) + \alpha^2\left(\hat{V}_2 + [\hat{S},\hat{V}_1] + \frac{1}{2}[\hat{S},[\hat{S},\hat{H}_0]]\right) + \mathcal{O}(\alpha^3). \quad (32)$$

Looking at the first-order term, it is natural to choose $\hat{S}$ such that $[\hat{S},\hat{H}_0] = -\hat{V}_1$, i.e. so that we cancel any couplings to the coupler states up to lowest order. However in order to do so and account for the couplings to the higher state correctly, we generalize the transformation from Refs.[29,45]

$$\hat{S}_i = \sum_{n_{q_i},n_c\in\{0,1\}} \sqrt{(n_{q_i}+1)(n_c+1)}\left[\frac{g_{q_ic}}{\Delta_{q_ic} + n_{q_i}\alpha_{q_i} - n_c\alpha_c}\left(\hat{\pi}_{q_i}^{n_{q_i}+1,n_{q_i}}\hat{\pi}_c^{n_c,n_c+1} - \hat{\pi}_{q_i}^{n_{q_i},n_{q_i}+1}\hat{\pi}_c^{n_c+1,n_c}\right)\right.$$
$$\left. - \frac{g_{q_ic}}{\Sigma_{q_ic} + n_{q_i}\alpha_{q_i} + n_c\alpha_c}\left(\hat{\pi}_{q_i}^{n_{q_i}+1,n_{q_i}}\hat{\pi}_c^{n_c+1,n_c} - \hat{\pi}_{q_i}^{n_{q_i},n_{q_i}+1}\hat{\pi}_c^{n_c,n_c+1}\right)\right], \quad (33)$$

$$\hat{S} = \hat{S}_1 + \hat{S}_2. \quad (34)$$

We have additionally defined $\Delta_{q_ic} = \omega_{q_i} - \omega_c$, $\Sigma_{q_ic} = \omega_{q_i} + \omega_c$ and the operators $\hat{\pi}_k^{n,m} = |n\rangle\langle m|$, acting in the Hilbert space of $k \in \{q_1,, c, q_2\}$.

Since we have assumed the coupler remains in the ground state at all times, the effective Hamiltonian is defined on the set of states $\{|0_{q1}\,0_c0_{q2}\rangle, |0_{q1}\,0_c\,1_{q2}\rangle, |1_{q1}0_c0_{q2}\rangle, |1_{q1}\,0_c\,1_{q2}\rangle, |0_{q1}\,0_c2_{q2}\rangle\}$. Additionally, we neglect any couplings outside of the subspace of interest, however the resulting effective Hamiltonian still contains terms coupling the levels $|000\rangle \leftrightarrow |101\rangle$ and $|000\rangle \leftrightarrow |002\rangle$. These couplings are neglected in the rotating-wave approximation, as these transitions do not conserve the total occupation number.

By additionally setting the energy of the ground state to zero we arrive at the effective subspace Hamiltonian from Eq. 11. The perturbative parameter values are given by

$$\tilde{\omega}_{q_i} = \omega_{q_i} + \frac{g_{q_ic}^2}{\Delta_{q_ic}} + \frac{2g_{q_ic}^2}{\Sigma_{q_ic} + \alpha_{q_i}} + \frac{g_{q_ic}^2}{\Sigma_{q_ic}}, \quad (35)$$

$$\tilde{\alpha}_{q_i} = \alpha_{q_i} - \frac{2g_{q_ic}^2}{\Delta_{q_ic}} + \frac{2g_{q_ic}^2}{\Delta_{q_ic} + \alpha_{q_i}} + \frac{4g_{q_ic}^2}{\Sigma_{q_ic} + \alpha_{q_i}} + \frac{g_{q_ic}^2}{\Sigma_{q_ic}} - \frac{3g_{q_ic}^2}{\Sigma_{q_ic} + 2\alpha_{q_i}}, \quad (36)$$

$$\tilde{g}_{01,10} = g_{q_1q_2} + \frac{g_{q_1c}g_{q_2c}}{2}\left(\frac{1}{\Delta_{q_1c}} + \frac{1}{\Delta_{q_2c}} - \frac{1}{\Sigma_{q_1c}} - \frac{1}{\Sigma_{q_2c}}\right), \quad (37)$$

$$\tilde{g}_{11,02} = \sqrt{2}\left[g_{q_1q_2} + \frac{g_{q_1c}g_{q_2c}}{2}\left(\frac{1}{\Delta_{q_1c}} + \frac{1}{\Delta_{q_2c} + \alpha_{q_2}} - \frac{1}{\Sigma_{q_1c}} - \frac{1}{\Sigma_{q_2c} + \alpha_{q_2}}\right)\right]. \quad (38)$$

**Fidelity Scaling**

Scaling of the fidelity with the number of gates, i.e. computing the process fidelity of sequential application of *N* gates, can be found by using Eq. 20 to first define the map corresponding to a series of gates

$$(\mathrm{CPHASE}_P)^N[\hat{\rho}] = \sum_{k=0}^{N} \binom{N}{k} \hat{U}_-^k \hat{U}_+^{(N-k)} \hat{\rho}\, \hat{U}_-^{(N-k)} \hat{U}_+^k, \tag{39}$$

where we have used the fact that the operators in Eq. 21 are diagonal and therefore commute with each other and also $\hat{U}_+^\dagger = \hat{U}_-$. Using the effective Kraus operators from Eq. 39, and only considering the conditional phase error, we combine this with the fidelity definition from Eq. 22, and obtain

$$\mathscr{F}[(\mathrm{CPHASE}_P)^N] = \frac{d + \sum_{k=0}^{N} \binom{N}{k} \left| \mathrm{tr}\left\{ \left(\hat{U}_{\mathrm{CPHASE}}^\dagger\right)^N \hat{U}_-^k \hat{U}_+^{(N-k)} \right\} \right|^2}{d^2 + d} \tag{40}$$

$$= \frac{4 + \frac{1}{2^N} \sum_{k=0}^{N} \binom{N}{k} \left[ 10 + 6\cos\left( \frac{\delta\phi}{2}(N-2k) \right) \right]}{20} \tag{41}$$

$$\approx 1 - \frac{3}{80}(\delta\phi)^2 \frac{1}{2^N} \sum_{k=0}^{N} \binom{N}{k} (N-2k)^2 \tag{42}$$

$$= 1 - \frac{3}{80} N (\delta\phi)^2. \tag{43}$$

This result indicates that calibrating the gate such that the error is evenly split between the two parities not only increases the single-gate fidelity but also leads to a more generous scaling of the infidelity $\propto N$, compared to the purely coherent error case for which the error scales as $\propto N^{2}$[61].

**Gate parameters for high-fidelity simulations**

Finding good gate parameters, both for the Hamiltonian as well as for the pulse for high-fidelity simulations, is not a trivial task. Here, we discuss how to find optimal Hamiltonian parameters at different qubit frequencies and anharamonicities. In general, the only prerequisite is that the qubits are detuned by approximately one anharmonicity, which can be seen from Eq. 11.

**Table 2.** Table of Hamiltonian parameters (Eq. 7) with which high-fidelity CZ gates are possible.

| | |
|---|---|
| $\alpha_{q1}$ | $\alpha_{q2}$ + 10·$h$MHz |
| $\alpha_c$ | -110·$h$MHz |
| $\omega_{q2}$ | 4.8 · $h$GHz |
| $\omega_{q1}$ | $\omega_{q2} + \alpha_{q2}$ + 10·$h$ MHz |
| $\beta_{1c}$ | 0.015 |
| $\beta_{1c}$ | 0.015 |
| $\beta_{12}$ | 0.001 |

As seen from Table 2, we keep some of the parameters in the simulation fixed, while others depend on $\alpha_{q2}$, which is varied. These parameters are based on the experimental values from Ref.[27] and the coupling coefficients from the Hamiltonian in Eq. 7 are related to $\beta_{ij}$ via the following relation $g_{ij} = \beta_{ij}\sqrt{\omega_i \omega_j}$, as described in the main text. The small perturbation to $\alpha_{q1}$ is there in order to ensure that the energy levels are significantly non-degenerate for perturbation theory to apply. This is also completely realistic as a typical fabrication procedure results in seemingly random deviations from the designed values. More specifically, the gates simulated in Fig. 2(a,b) are obtained by varying $\alpha_{q2}$ with values $\alpha_{q2} \in$ [195,230,250,270,300]$h$MHz. Additionally, in order to certify that the analyzed effect is not limited to the choice of parameters presented above, the second data point of Fig. 2(a,b) at $E_J/E_C \approx 50$, was generated in the same way as in Table 2, but with the change to $\omega_{q2}$ = 5.1· $h$ GHz. The coupler frequency in the idling configuration $\omega_c^{\mathrm{idle}}$, i.e. before and after performing a gate, is determined by diagonalizing the Hamiltonian to fulfill condition Eq. 8. The pulse parameters from Eq. 9 are obtained by numerically optimizing the fidelity of the gate, with fixed $\sigma$ = 5 ns and $\tau_b = 2\sqrt{2}\sigma$. Typical values of the amplitude are $A$ ~ 1 - 1.2·$2\pi h$GHz and $\tau_c$ ~ 60ns.

## Scaling of Transmon Error Sources

In this section we derive the scaling of the noise parameters shown in Table 1 with the transmon energies $E_J$ and $E_C$.

The noise is modeled by appending the appropriate noise channel after the gate unitary, and the calculated infidelity is thus independent of the unitary dynamics, as was shown in Ref.[82].

### *Charge noise* $T_1$

The $T_1$ decay time of transmon devices is believed to be currently limited by the presence of a discrete number of environmental two-level systems (TLSs) which couple to the qubit via their electrical dipole[63-69]. Therefore assuming that the charge noise in the system is weak enough, the interaction Hamiltonian between a transmon and an environmental TLS can be derived from Eq. 1, by replacing $n_g \to n_g + \delta\hat{n}_g$, as in Refs.[64,69], so that

$$\hat{H}_{\text{q-TLS}} = 8E_C\,\hat{n}\otimes\delta\hat{n}_g = -4\sqrt{2}E_C\left(\frac{E_J}{8E_C}\right)^{\frac{1}{4}} i(\hat{a}-\hat{a}^\dagger)\otimes\delta\hat{n}_g. \tag{44}$$

In the above equation, we have used the asymptotic expression for the number operator $\hat{n}$, derived already in Ref.[5] . The operator $\delta\hat{n}_g$ is defined in the Hilbert space of the TLS, and is related to the parameters of the TLS - more specifically, its electrical dipole[67]. More importantly, $\delta\hat{n}_g$ does not explicitly depend on $E_J$ and $E_C$.

Since the majority of the $T_1$ experiments on transmons display exponential decays[83], the dynamics can be captured by the Lindblad equation. As a second-order approximation is assumed in the derivation of the Lindblad equation, the resulting decay rates are found to be proportional to the square of the coupling coefficient of the transmon to the TLS environment[58]. In our case this translates to

$$\Gamma_1 \propto E_C^{3/2}E_J^{1/2}. \tag{45}$$

Here we have omitted the noise spectrum of the environment, since current models assume a flat noise spectrum without any dependence on the qubit frequency[67].

### *Flux noise* $T_\phi$

While it is not strictly necessary for the computational transmons to be flux-tunable, it is often desired as flux-tunability additionally enables the implementation of an iSWAP gate with the same architecture[27,29]. Having slow flux tunability is also desirable in order to avoid resonances with TLSs in the environment which can severely limit the $T_1$ decay time[68,69], as well as helping with the issue of frequency crowding[77].

However, unlike the TLS environment producing $T_1$ dynamics, the noise spectrum of magnetic-flux noise is typically observed to have a $1/f^\alpha$ frequency dependence[63,70-72], with $\alpha$ ~ 1. The large noise-spectrum amplitude at lower frequencies means that the long-time correlation results in non-Markovian dynamics[84]. Assuming that the noise is slow enough, in order for the adiabatic approximation to hold, the interaction Hamiltonian due to a slowly fluctuating magnetic environment $\delta\hat{\Phi}$ is given by[5]

$$\hat{H}_{\text{q-flux}} = \frac{\partial\hat{H}}{\partial\Phi}\otimes\delta\hat{\Phi} = \hbar\frac{\partial\omega}{\partial\Phi}\hat{a}^\dagger\hat{a}\otimes\delta\hat{\Phi}. \tag{46}$$

The form of the flux dispersion $\partial\omega/\partial\Phi$ of a split-junction transmon, with Josephson energies $E_{J_1}$ and $E_{J_2}$, is determined by the relations[5]

$$E_J(\Phi) = E_{J\Sigma}\cos(\pi\Phi)\sqrt{1+d^2\tan^2(\pi\Phi)}, \tag{47}$$

$$\hbar\omega(\Phi) = \sqrt{8E_C E_J(\Phi)} - E_C, \tag{48}$$

with $E_{J\Sigma} = E_{J_1} + E_{J_2}$ and $d = |E_{J_1} - E_{J_2}|/(E_{J_1} + E_{J_2})$. Identically as in the $T_1$-decay example, we assume that the environment operator $\delta\hat{\Phi}$ does not depend on the transmon parameters. Realistically, the magnitude of this operator depends on the dot product between the magnetic-dipole operator of the spins and the surface vector of the SQUID loop.

Even though the Markovian approximation does not hold anymore, the decay rate due to this noise still scales with the square of the coupling coefficient[85,86], which brings us to

$$\Gamma_\phi \propto \left(\frac{\partial\omega}{\partial\Phi}\right)^2 \propto E_C E_{J\Sigma}. \tag{49}$$

While we have explicitly acknowledged only the first order flux dispersion $\partial\omega/\partial\Phi$, it is easy to see that the above scaling is valid even if $\partial\omega/\partial\Phi = 0$, and we must take into account the second, or any other order dispersion $\partial^n\omega/\partial\Phi^n$ Additionally, in the main text we assume that $E_J \approx E_{J\Sigma}$, which is a realistic assumption precisely since large deviations from this condition result in an increased sensitivity to flux noise.

### *Single-Qubit Gate Leakage*

The low anharmonicity of the transmon is a limiting factor in the operation of single-qubit gates[31,73] as fast operations drive a part of the population from the computational subspace into the second excited state. A straightforward and effective scheme for mitigating this effect while implementing single-qubit gates known as Derivative Removal by Adiabatic Gate (DRAG) was presented in Ref.[73].

Since typical pulse amplitudes used to perform single-qubit operations are typically much lower compared to the qubit frequency, and the drive is resonant with the qubit, we assume that the rotating-wave approximation is accurate. In the frame rotating with the qubit frequency, the effective Hamiltonian depends on the pulse parameters, anharmonicity, and the detuning between the drive and qubit frequencies. This indicates that the amount of leakage does not explicitly depend on the qubit frequency.

Thus, the process fidelity, similar to the one defined in Eq. 22, but in this case for a single-qubit rotation around the *x* or y-axes, depends only on the qubit anharmonicity (or charging energy), since $\alpha \simeq -E_C$ in the transmon limit. This means that even though analytical results are not available, the relationship can be determined numerically and interpolated. This relationship, albeit with different parameters, has already been plotted in Ref. [73] , and generally follows a dependence of $P_{\text{leak.}} \propto E_C^{-\gamma},\ 5 \lesssim \gamma \lesssim 6.$, with higher exponents observed at lower $E_C$. The independence of the single-qubit gate infidelity of the qubit frequency (within the transmon regime) was also verified numerically.

The single-qubit gate parameters assumed in Fig 4(d) and Fig 5 were a DRAG Gaussian pulse, with a $\sigma$ = 4ns and a total duration $t_{SQG} = 4\sigma$. The amplitudes of both DRAG components are numerically optimized before interpolating the dependence of $P_{\text{leak}}$. on $\alpha$, which was used to generate Fig. 4(d). The pulse drive frequency is assumed to be resonant with the qubit. More details are available in Ref.[31]. We note here, that most of the SQG infidelity is due to leakage, rather than phase errors.

### *Thermal Excitation Error*

While other error sources affect the gate performance, the thermal-excitation error considered here only affects the state preparation. The process fidelity, which is defined as the fidelity averaged over Haar random distributed input states, is therefore not applicable, since this error only affects one input state. We therefore replace the process infidelity[59] with a state infidelity. This can also be qualitatively thought of as replacing the Haar random distribution with a delta-like distribution with a peak at the 10) state. By modeling the thermal excitation as a bit-flip channel

$$\mathscr{E}[\hat{\rho}] = (1 - P_{|1\rangle})\hat{\rho} + P_{|1\rangle}\hat{\sigma}_x\hat{\rho}\hat{\sigma}_x$$

it is straightforward to see that the state infidelity[47]

$$\mathscr{F} = \langle 0|\mathscr{E}[|0\rangle\langle 0|]|0\rangle = 1 - P_{|1\rangle} = \frac{1}{1 + e^{-\beta\omega}}, \tag{50}$$

where we have additionally assumed that the temperature is low enough such that the population of the higher-excited states is negligible.

**References**

**1.** Kjaergaard, M. et al. Superconducting qubits: Current state of play. Annu. Rev. Condens. Matter Phys. 11, 369-395, DOI: 10.1146/annurev-conmatphys-031119-050605 (2020). https://doi.org/10.1146/annurev-conmatphys-031119-050605.

**2.** Huang, H.-L., Wu, D., Fan, D. & Zhu, X. Superconducting quantum computing: a review. Sci. China Inf: Sci. 63, DOI: 10.1007/s11432-020-2881-9 (2020).

**3.** Martinis, J. M. Surface loss calculations and design of a superconducting transmon qubit with tapered wiring. npj Quantum Inf. 8, 26, DOI: 10.1038/s41534-022-00530.6 (2022).

**4.** Eun, S., Park, S. H., Seo, K., Choi, K. & Hahn, S. Shape optimization of superconducting transmon qubit for low surface dielectric loss (2022). 2211.14159.

**5.** Koch, J. et al. Charge-insensitive qubit design derived from the cooper pair box. Phys. Rev. A 76, 042319, DOI: 10.1103/PhysRevA.76.042319 (2007).

**6.** Arute, F. et al. Quantum supremacy using a programmable superconducting processor. Nature 574, 505-510, DOI: 10.1038/s4) 586-019-1666-5 (2019).

**7.** Acharya, R. et al. Suppressing quantum errors by scaling a surface code logical qubit. Nature 614, 676-681, DOI: 10.1038/s41586-022-05434-1 (2023).

**8.** Kim, Y. et al. Evidence for the utility of quantum computing before fault tolerance. Nature 618, 500-505, DOI: 1 0.1038/s41586-023-06096-3 (2023).

**9.** Cao, S. et al. Generation of genuine entanglement up to 51 superconducting qubits. Nature DOI: 10.1038/ s41586-023-06195-1 (2023).

**10.** Wu, Y. et al. Strong quantum computational advantage using a superconducting quantum processor. Phys. Rev. Lett. 127, 180501, DOI: 10.1103/PhysRevLett. 127.180501 (2021).

**11.** Glazman, L. & Catelani, G. Bogoliubov quasiparticles in superconducting qubits. SciPost Phys. Lect. Notes DOI: 10.21468/scipostphyslectnotes.31 (2021).

**12.** Catelani, G. & Pekola, J. P. Using materials for quasiparticle engineering. Mater. for Quantum Technol. 2, 013001, DOI: 10.1088/2633-4356/ac4a75 (2022).

**13.** Catelani, G. et al. Quasiparticle relaxation of superconducting qubits in the presence of flux. Phys. Rev. Lett. 106, 077002, DOI: 10.1 103/PliysRevLett. 106.077002 (2011).

**14.** Catelani, G., Schoelkopf, R. J., Devoret, M. H. & Glazman, L. I. Relaxation and frequency shifts induced by quasiparticles in superconducting qubits. Phys. Rev. B 84, 064517, DOI: 10.1103/PhysRevB.84.064517 (2011).

**15.** Córcoles, A. D. et al. Protecting superconducting qubits from radiation. Appl. Phys. Lett. 99, 181906, DOI: 10.1063/1. 3658630 (2011). https://pubs.aip.org/aip/apl/article-pdf/doi/10.1063/1.3658630/16731205/181906_1_online.pdf.

**16.** Catelani, G., Nigg, S. E., Girvin, S. M., Schoelkopf, R. J. & Glazman, L. I. Decoherence of superconducting qubits caused by quasiparticle tunneling. Phys. Rev. B 86, 184514, DOI: 10,1103/PhysRevB.86.184514 (2012).

**17.** Catelani, G. Parity switching and decoherence by quasiparticles in single-junction transmons. Phys. Rev. B 89, 094522, DOI: 10.1103/PhysRevB.89.094522 (2014).

**18.** Pop, I. M. et al. Coherent suppression of electromagnetic dissipation due to superconducting quasiparticles. Nature 508, 369-372, DOI: 10.1038/nature13017 (2014).

**19.** Riwar, R.-P. et al. Normal-metal quasiparticle traps for superconducting qubits. Phys. Rev. B 94, 104516, DOI: 10.1103/ PhysRevB.94.104516 (2016).

**20.** Hosseinkhani, A., Riwar, R.-P., Schoelkopf, R. J., Glazman, L. I. & Catelani, G. Optimal configurations for normal-metal traps in transmon qubits. Phys. Rev. Appl. 8, 064028, DOI: 10.1103/PhysRevApplied.8.064028 (2017).

**21.** Hosseinkhani, A. & Catelani, G. Proximity effect in normal-metal quasiparticle traps. Phys. Rev. B 97, 054513, DOI: 10,1103/PhysRevB.97.054513 (2018).

**22.** Sun, L. et al. Measurements of quasiparticle tunneling dynamics in a band-gap-engineered transmon qubit. Phys. Rev. Lett. 108, 230509, DOI: 10.1103/PhysRevLett.108.230509 (2012).

**23.** Riwar, R.-P. & Catelani, G. Efficient quasiparticle traps with low dissipation through gap engineering. Phys. Rev. B 100, 144514, DOI: 10.1103/PhysRevB.100.144514 (2019).

**24.** Marchegiani, G., Amico, L. & Catelani, G. Quasiparticles in superconducting qubits with asymmetric junctions. PRX Quantum 3, 040338, DOI: 10.1103/PRXQuantum.3.040338 (2022).

**25.** Pan, X. et al. Engineering superconducting qubits to reduce quasiparticles and charge noise. Nat. Commun. 13, 7196, DOI: 10.1038/s41467-022-34727-2 (2022).

**26.** Smith, W. C., Kou, A., Xiao, X., Vool, U. & Devoret, M. H. Superconducting circuit protected by two-cooper-pair tunneling. npj Quantum Inf. 6, 8, DOI: 10.1038/s41534-09-0031-2 (2020).

**27.** Sung, Y. et al. Realization of high-fidelity cz and zz-free iswap gates with a tunable coupler. Phys. Rev. X 11, 021058, DOI: 10.1103/PhysRevX.11.021058 (2021).

**28.** Xu, H. et al. Realization of adiabatic and diabatic CZ gates in superconducting qubits coupled with a tunable coupler. Chin. Phys. B 30, 044212, DOI: 10.1088/1674-1056/abf03a (2021).

**29.** Yan, F. et al. Tunable coupling scheme for implementing high-fidelity two-qubit gates. Phys. Rev. Appl. 10, 054062, DOI: 10.1103/PhysRevApplied.10.054062 (2018).

**30.** Chu, J. & Yan, F. Coupler-assisted controlled-phase gate with enhanced adiabaticity. Phys. Rev. Appl. 16, 054020, DOI: 10.1103/PhysRevApplied.16.054020 (2021).

**31.** Papič, M., Auer, A. & de Vega, I. Error sources of quantum gates in superconducting qubits (2023). 2305.08916.

**32.** Marxer, F. et al. Long-distance transmon coupler with cz-gate fidelity above 99.8%. PRX Quantum 4, 010314, DOI: 10.1 103/PRXQuantum.4.010314 (2023).

**33.** Sete, E. A., Chen, A. Q., Manenti, R., Kulshreshtha, S. & Poletto, S. Floating tunable coupler for scalable quantum computing architectures. Phys. Rev. Appl. 15, 064063, DOI: 10.1 103/PhysRevApplied.15.064063 (2021).

**34.** Goto, H. Double-transmon coupler: Fast two-qubit gate with no residual coupling for highly detuned superconducting qubits. Phys. Rev. Appl. 18, 034038, DOI: 10.1103/PhysRevApplied.18.034038 (2022).

**35.** Stehlik, J. et al. Tunable coupling architecture for fixed-frequency transmon superconducting qubits. Phys. Rev. Lett. 127, 080505, DOI: 10.1 103/PhysRevLett.127.080505 (2021).

**36.** Xu, Y. et al. High-fidelity, high-scalability two-qubit gate scheme for superconducting qubits. Phys. Rev. Lett. 125, 240503, DOI: 10,1103/PhysRevLett.125.240503 (2020).

**37.** Jurcevic, P. & Govia, L. C. G. Effective qubit dephasing induced by spectator-qubit relaxation. Quantum Sci. Technol. 7, 045033, DOI: 10.1088/2058-9565/ac8cad (2022).

**38.** Mundada, P., Zhang, G., Hazard, T. & Houck, A. Suppression of qubit crosstalk in a tunable coupling superconducting circuit. Phys. Rev. Appl. 12, 054023, DOI: 10.1103/PhysRevApplied.12.054023 (2019).

**39.** Wang, C. et al. Towards practical quantum computers: transmon qubit with a lifetime approaching 0.5 milliseconds. npj Quantum Inf. 8, 3, DOI: 10.1038/s41534-021-00510-2 (2022).

**40.** Place, A. P. M. et al. New material platform for superconducting transmon qubits with coherence times exceeding 0.3 milliseconds. Nat. Commun. 12, 1779, DOI: 10.1038/s41467-021-22030-5 (2021).

**41.** Willsch, D. et al. Observation of josephson harmonics in tunnel junctions (2023). 2302.09192.

**42.** Serniak, K. et al. Direct dispersive monitoring of charge parity in offset-charge-sensitive transmons. Phys. Rev. Appl. 12, DOI: 10,1103/physrevapplied.12.014052 (2019).

**43.** Rol, M. et al. Fast, high-fidelity conditional-phase gate exploiting leakage interference in weakly anharmonic superconducting qubits. Phys. Rev. Lett. 123, DOI: 10.1103/physrevlett.123.120502 (2019).

**44.** Collodo, M. C. et al. Implementation of conditional phase gates based on tunable zz interactions. Phys. Rev. Lett. 125, 240502, DOI: 10.1103/PhysRevLett.125.240502 (2020).

**45.** Heunisch, L., Eichler, C. & Hartmann, M. J. Tunable coupler to fully decouple superconducting qubits (2023). 2306.17007.

**46.** McKay, D. C., Wood, C. J., Sheldon, S., Chow, J. M. & Gambetta, J. M. Efficient z gates for quantum computing. Phys. Rev. A 96, 022330, DOI: 10.1103/PhysRevA.96.022330 (2017).

**47.** Nielsen, M. A. & Chuang, I. L. Quantum Computation and Quantum Information (Cambridge University Press, 2000).

**48.** Diamond, S. et al. Distinguishing parity-switching mechanisms in a superconducting qubit. PRX Quantum 3, 040304, DOI: 10.1 103/PRXQuantum.3.040304 (2022).

**49.** Ristè, D. et al. Millisecond charge-parity fluctuations and induced decoherence in a superconducting transmon qubit. Nat. Commun. 4, DOI: 10.1038/ncoms2936 (2013).

**50.** Serniak, K. et al. Hot nonequilibrium quasiparticles in transmon qubits. Phys. Rev. Lett. 121, 157701, DOI: 10.1103/ PhysRevLett.121.157701 (2018).

**51.** Kurter, C. et al. Quasiparticle tunneling as a probe of josephson junction barrier and capacitor material in superconducting qubits. npj Quantum Inf. 8, 31, DOI: 10.1038/s41534-022-00542-2 (2022).

**52.** Tennant, D. M. et al. Low-frequency correlated charge-noise measurements across multiple energy transitions in a tantalum transmon. PRX Quantum 3, 030307, DOI: 10.1103/PRXQuantum.3.030307 (2022).

**53.** Thorbeck, T., Eddins, A., Lauer, I., McClure, D. T. & Carroll, M. Two-level-system dynamics in a superconducting qubit due to background ionizing radiation. PRX Quantum 4, 020356, DOI: 10.1 103/PRXQuantum.4.020356 (2023).

**54.** McEwen, M. et al. Resolving catastrophic error bursts from cosmic rays in large arrays of superconducting qubits. Nat. Phys. 18, 107-111, DOI: 10.1038/s41567-021-01432-8 (2021).

**55.** Cardani, L. et al. Reducing the impact of radioactivity on quantum circuits in a deep-underground facility. Nat. Commun. 12, 2733, DOI: 10.1038/s41467-021-23032-z (2021).

**56.** Grünhaupt, L. et al. Loss mechanisms and quasiparticle dynamics in superconducting microwave resonators made of thin-film granular aluminum. Phys. Rev. Lett. 121, 1 17001, DOI: 10.1 103/PhysRevLett.121.117001 (2018).

**57.** Wack, A. et al. Quality, speed, and scale: three key attributes to measure the performance of near-term quantum computers (2021). 2110.14108.

**58.** Breuer, H., Petruccione, F. & Petruccione, S. The Theory of Open Quantum Systems (Oxford University Press, 2002).

**59.** Emerson, J., Alicki, R. & Zyczkowski, K. Scalable noise estimation with random unitary operators. J. Opt. B: Quantum Semiclassical Opt. 7, S347, DOI: 10.1088/1464-4266/7/10/021 (2005).

**60.** Wood, C. J. & Gambetta, J. M. Quantification and characterization of leakage errors. Phys. Rev. A 97, 032306, DOI: 10.1103/PhysRevA.97.032306 (2018).

**61.** Hashim, A. et al. Randomized compiling for scalable quantum computing on a noisy superconducting quantum processor. Phys. Rev. X 11, 041039, DOI: 10.1103/PhysRevX.11.041039 (2021).

**62.** Wallman, J. J. & Flammia, S. T. Randomized benchmarking with confidence. New J. Phys. 16, 103032, DOI: 10.1088/ 1367-2630/16/10/103032 (2014).

**63.** Siddiqi, I. Engineering high-coherence superconducting qubits. Nat. Rev. Mater. 6, 875-891, DOI: 10.1038/ s41578-021-00370-4 (2021).

**64.** Müller, C., Cole, J. H. & Lisenfeld, J. Towards understanding two-level-systems in amorphous solids: insights from quantum circuits. Reports on Prog. Phys. 82, 124501, DOI: 10.1088/1361-6633/ab3a7e (2019).

**65.** Carroll, M., Rosenblatt, S., Jurcevic, P., Lauer, I. & Kandala, A. Dynamics of superconducting qubit relaxation times. npj Quantum Inf. 8, 132, DOI: 10.1038/s41534-022-00643-y (2022).

**66.** Premkumar, A. et al. Microscopic relaxation channels in materials for superconducting qubits. Commun. Mater. 2, 72, DOI: 10.1038/s43246-021-00174-7 (2021).

**67.** Cho, Y. et al. Simulating noise on a quantum processor: interactions between a qubit and resonant two-level system bath, DOI: 10.48550/ARXIV.2211.08535 (2022).

**68.** Lisenfeld, J. et al. Electric field spectroscopy of material defects in transmon qubits. npj Quantum Inf. 5, DOI: 10.1038/ s41534-019-0224-1 (2019).

**69.** Abdurakhimov, L. V. et al. Identification of different types of high-frequency defects in superconducting qubits. PRX Quantum 3, 040332, DOI: 10.1 103/PRXQuantum.3.040332 (2022).

**70.** Rower, D. A. et al. Evolution of 1 / f flux noise in superconducting qubits with weak magnetic fields. Phys. Rev. Lett. 130, 220602, DOI: 10.1 103/PhysRevLett.130.220602 (2023).

**71.** Braumüller, J. et al. Characterizing and optimizing qubit coherence based on squid geometry. Phys. Rev. Appl. 13, 054079, DOI: 10.1 103/PhysRevApplied.13.054079 (2020).

**72.** Yan, F. et al. The flux qubit revisited to enhance coherence and reproducibility. Nat. Commun. 7, DOI: 10.1038/ ncomms12964 (2016).

**73.** Motzoi, F., Gambetta, J. M., Rebentrost, P. & Wilhelm, F. K. Simple pulses for elimination of leakage in weakly nonlinear qubits. Phys. Rev. Lett. 103, 110501, DOI: 10.1103/PhysRevLett.103.110501 (2009).

**74.** Wenner, J. et al. Excitation of superconducting qubits from hot nonequilibrium quasiparticles. Phys. Rev. Lett. 110, 150502, DOI: 10.1 103/PhysRevLett.110.150502 (2013).

**75.** Jin, X. Y. et al. Thermal and residual excited-state population in a 3d transmon qubit. Phys. Rev. Lett. 114, 240501, DOI: 10.1103/PhysRevLett.114.240501 (2015).

**76.** Heinsoo, J. et al. Rapid high-fidelity multiplexed readout of superconducting qubits. Phys. Rev. Appl. 10, 034040, DOI: 10.1103/PhysRevApplied.10.034040 (2018).

**77.** Berke, C., Varvelis, E., Trebst, S., Altland, A. & DiVincenzo, D. P. Transmon platform for quantum computing challenged by chaotic fluctuations. Nat. Commun. 13, 2495, DOI: 10.1038/s41467-022-29940-y (2022).

**78.** Algaba, M. G. et al. Co-design quantum simulation of nanoscale nmr. Phys. Rev. Res. 4, 043089, DOI: 10.1103/ PhysRevResearch.4.043089 (2022).

**79.** Christensen, B. G. et al. Anomalous charge noise in superconducting qubits. Phys. Rev. B 100, 140503, DOI: 10.1103/ PhysRevB.100.140503 (2019).

**80.** Wilen, C. D. et al. Correlated charge noise and relaxation errors in superconducting qubits. Nature 594, 369-373, DOI: 10.1038/s41 586-021 -03557-5 (2021).

**81.** Bravyi, S., DiVincenzo, D. P. & Loss, D. Schrieffer-wolff transformation for quantum many-body systems. Annals Phys. 326, 2793-2826, DOI: 10.1016/j.aop.2011.06.004 (2011).

**82.** Abad, T., Fernández-Pendás, J., Frisk Kockum, A. & Johansson, G. Universal fidelity reduction of quantum operations from weak dissipation. Phys. Rev. Lett. 129, 150504, DOI: 10.1103/PhysRevLett.129.150504 (2022).

**83.** Burnett, J. J. et al. Decoherence benchmarking of superconducting qubits. npj Quantum Inf. 5, DOI: 10.1038/ s41534-019-0168-5 (2019).

**84.** Papič, M. & de Vega, I. Neural-network-based qubit-environment characterization. Phys. Rev. A 105, 022605, DOI: 10.1103/PhysRevA.105.022605 (2022).

**85.** Bergli, J., Galperin, Y. M. & Altshuler, B. L. Decoherence in qubits due to low-frequency noise. New J. Phys. 11, 025002, DOI: 10.1088/1367-2630/1 1/2/025002 (2009).

**86.** Paladino, E., Galperin, Y. M., Falci, G. & Altshuler, B. L. 1/f noise: Implications for solid-state quantum information. Rev. Mod. Phys. 86, 361-418, DOI: 10.1103/RevModPhys.86.361 (2014).

**Claims**

1. A method of determining a range of optimal values for parameters of qubits used in an execution of a quantum algorithm on a quantum processing device, the method comprising the steps of:

   identifying a plurality of different error sources each causing an individual error contribution to the error in the implementation of the algorithm, wherein each individual error contribution depends on qubit parameters;
   deriving how these contributions scale with the qubit parameters;
   defining a performance measure C for the algorithm based on the individual error contributions of each error source;
   computing the value of the performance measure C for a range of physically feasible values of the qubit parameters;
   identifying the range of optimal values of qubit parameters as those among the range of feasible values of qubit parameters for which the computed values of the performance measure C fulfil an optimization criterion.

2. Method according to claim 1, further comprising the step of fabricating the quantum processing device comprising qubits for which the parameter values are in the identified optimal range.

3. Method according to claim 1 or 2, wherein said performance measure C is defined as a weighted sum of the individual error contributions $E_i$ according to $C = \Sigma_i w_i E_i$ with real weights $w_i \geq 0$.

4. Method according to claim 3, wherein the weight $w_i$ of each individual error contribution $E_i$ is determined on the basis of a number of applications of the corresponding operation in the algorithm.

5. Method according to anyone of the preceding claims, further comprising the step of defining an architecture and coupling graph of the quantum processing device.

6. Method according to anyone of the preceding claims, further comprising the step of obtaining a test device and characterizing error source parameters of the test device.

7. Method according to anyone of the preceding claims, wherein said individual error contributions include at least one corresponding to a single-qubit gate, a two-qubit gate, a potential error when the qubit is idling, state preparation or read-out.

8. Method according to anyone of the preceding claims, wherein said error sources include at least one of decoherence, relaxation and pure dephasing.

9. Method according to anyone of the preceding claims, wherein at least one of the qubits of the quantum processing device is a superconducting qubit.

10. Method according to claim 9, where the qubit parameters are selected from a list comprising a charging energy $E_C$, a Josephson energy $E_J$, and an inductive energy $E_L$ of the qubit.

11. Method according to claim 9 or 10, wherein the at least one of the qubits is a transmon.

12. Method according to anyone of claims 9 to 11, wherein said error sources include at least one of charge noise, flux nose, leakage, parity switch or thermal excitations.

13. Method according to claim 12, wherein the performance measure is defined as

$$C = \sum_{i=T_1,T_\phi,\text{parity}} \mathrm{w}_{TQG,i}\, E_{TQG,i} + \sum_{i=q_1,q_2} \sum_{j=T_1,T_\phi,\text{leak}} \mathrm{w}_{SQG,i,j} E_{SQG,i,j} + \sum_{i=q_1,q_2} \mathrm{w}_{SP,i} E_{SP,i},$$

wherein $i,j = T_1$, $T_\phi$, parity, leak is a label for charge noise, flux noise, parity switch and leakage, respectively, $i = q_1$, $q_2$ is a label for two qubits $q_1$, $q_2$; $w_{TQG,i}$, respectively $E_{TQG,i}$ are the weights, respectively error contributions associated with two-qubit gates and caused be the error source with label i; $\mathrm{w}_{SQG,i,j}$, respectively $E_{SQG,i,j}$ are the weights, respectively error contributions associated with single-qubit gates applied to the qubit with label $i = q_1$, $q_2$ and caused by the error source with the label j; and $\mathrm{w}_{SP,i}$, respectively $E_{SP,i}$ are the weights, respectively error contributions associated with state preparation of the qubit with the label $i = q_1$, $q_2$.

14. Method according to anyone of the preceding claims, wherein at least one, and in particular all error contributions is/are an infidelity contribution.

15. A quantum processing device comprising a plurality of qubits, wherein parameter values of said qubits are within a range of optimal values for an execution of a quantum algorithm on the quantum processing device, said range being determined by the method according to anyone of the preceding claims.

16. A computer program product including instructions which, when the program is executed by a computer, cause the computer to carry out the following steps:

- receiving qubit parameters, a range of physically feasible values of the qubit parameters and identifiers identifying a plurality of different error sources each causing an individual error contribution to the error in the implementation of a quantum algorithm on the quantum processing device comprising the qubits, wherein each individual error contribution depends on qubit parameters;
- deriving how these contributions scale with the qubit parameters;
- defining a performance measure C for the algorithm based on the individual error contributions of each error source;
- computing the value of the performance measure C for the range of physically feasible values of the qubit parameters;
- identifying the range of optimal values of qubit parameters as those among the range of feasible values of qubit parameters for which the computed values of the performance measure C fulfil an optimization criterion.

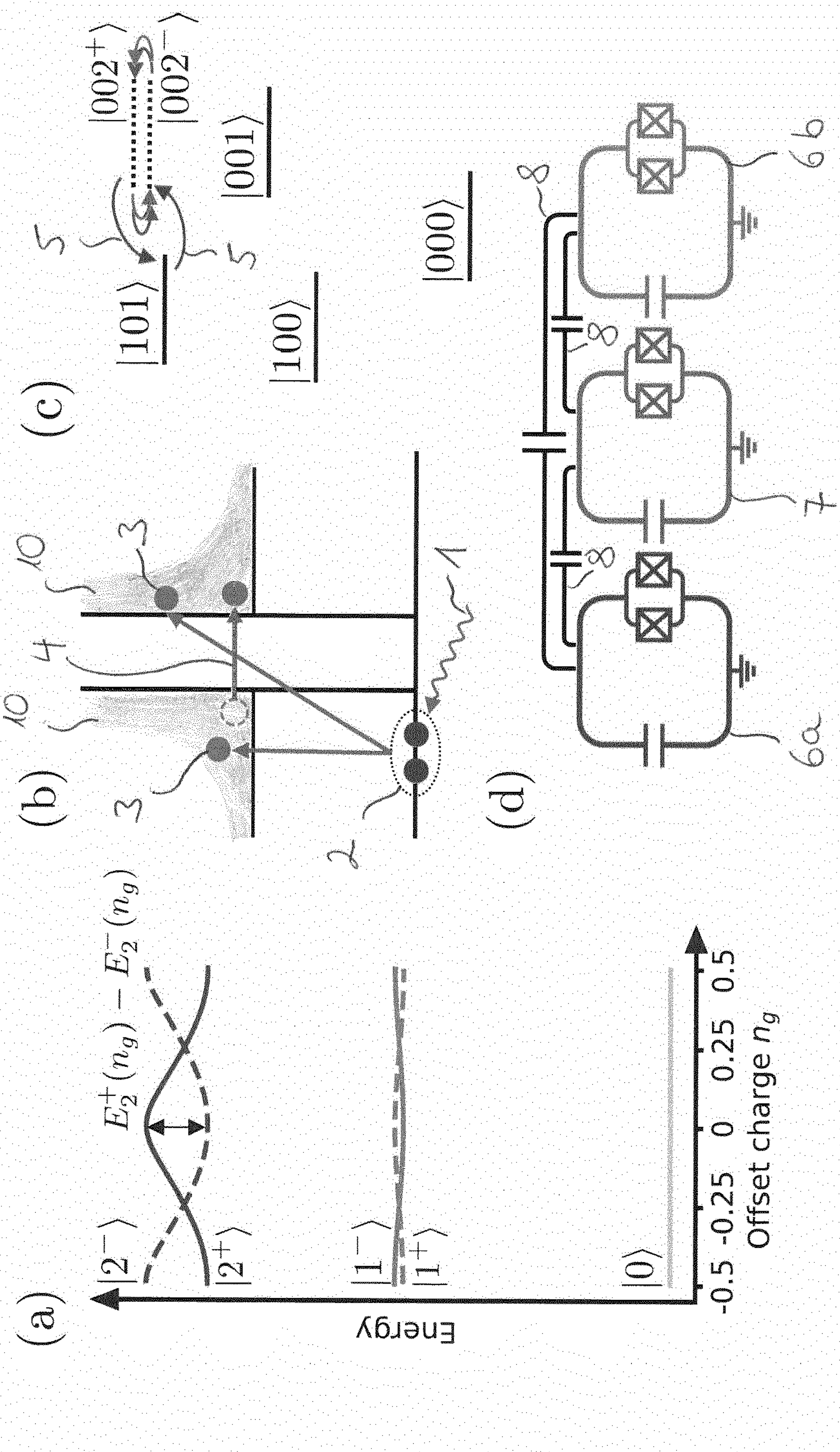
(a)
Energy
$|2^-\rangle$
$|2^+\rangle$
$E_2^+(n_g) - E_2^-(n_g)$
$|1^-\rangle$
$|1^+\rangle$
$|0\rangle$
-0.5 -0.25 0 0.25 0.5
Offset charge $n_g$
(b)
1
2
3
4
10
(c)
$|101\rangle$
$|100\rangle$
$|000\rangle$
$|001\rangle$
$|002^+\rangle$
$|002^-\rangle$
5
(d)
6a
6b
7
8

Fig. 1

Fig. 2

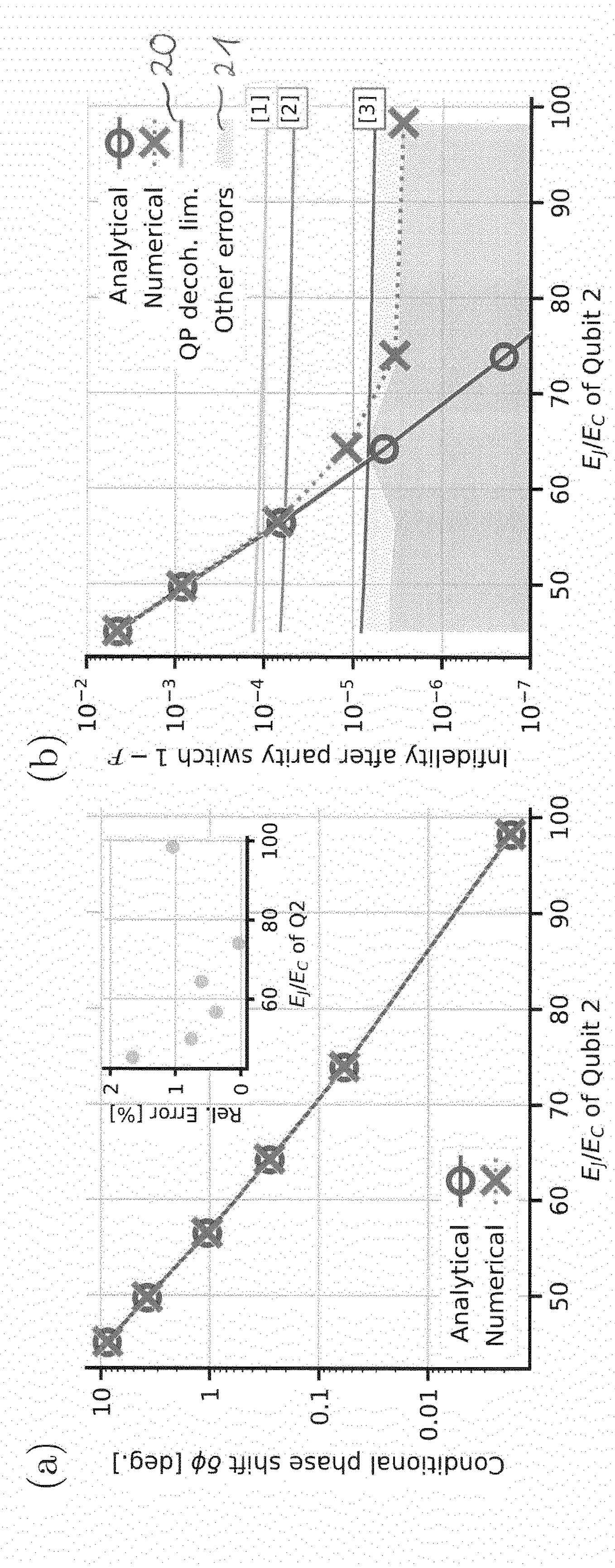
(a)
Conditional phase shift δϕ [deg.]
10
1
0.1
0.01
50
60
70
80
90
100
$E_J/E_C$ of Qubit 2
Analytical
Numerical
Rel. Error [%]
2
1
0
60
80
100
$E_J/E_C$ of Q2
(b)
Infidelity after parity switch 1 − F
$10^{-2}$
$10^{-3}$
$10^{-4}$
$10^{-5}$
$10^{-6}$
$10^{-7}$
50
60
70
80
90
100
$E_J/E_C$ of Qubit 2
Analytical
Numerical
QP decoh. lim.
Other errors
[1]
[2]
[3]
20
21

Fig. 3 (a)

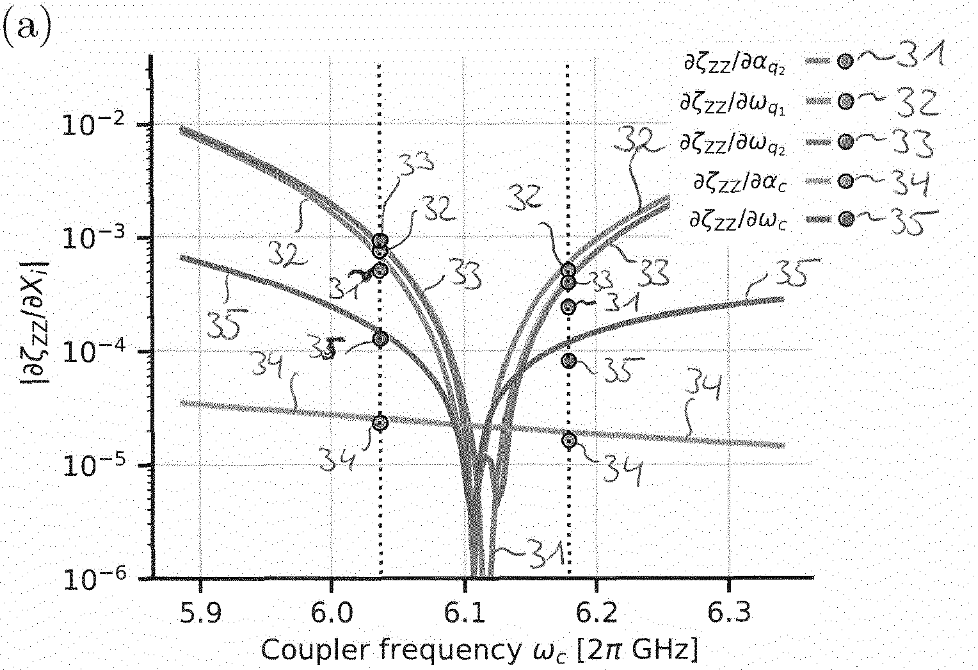
∂ζZZ/∂αq2 ~31
∂ζZZ/∂ωq1 ~32
∂ζZZ/∂ωq2 ~33
∂ζZZ/∂αc ~34
∂ζZZ/∂ωc ~35
|∂ζZZ/∂Xi|
10−2
10−3
10−4
10−5
10−6
5.9
6.0
6.1
6.2
6.3
Coupler frequency ωc [2π GHz]

Fig. 3 (b)

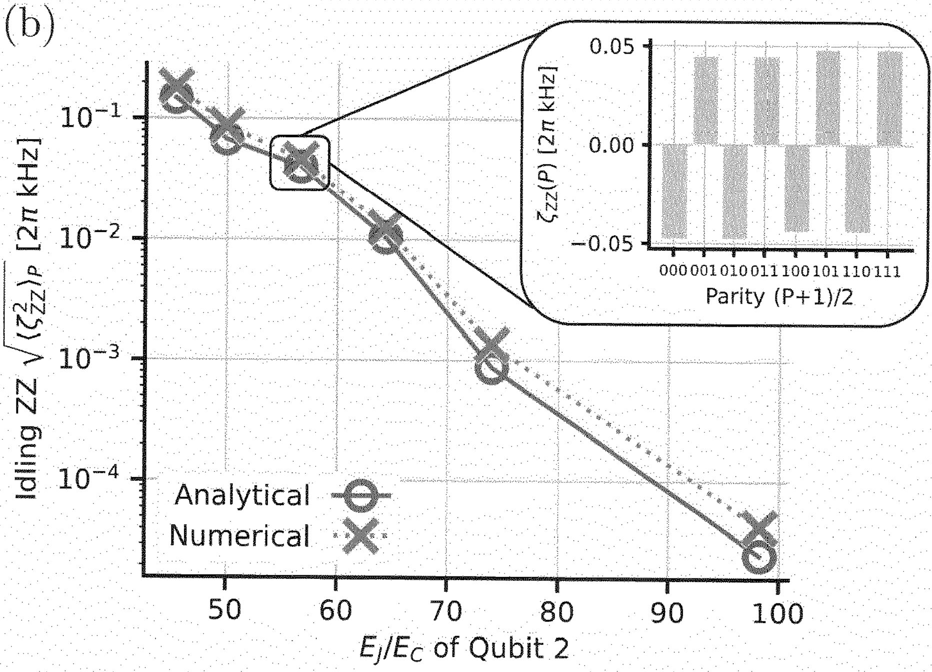
Idling ZZ $\sqrt{\langle \zeta_{ZZ}^2 \rangle_P}$ [2π kHz]
$10^{-1}$
$10^{-2}$
$10^{-3}$
$10^{-4}$
Analytical
Numerical
50
60
70
80
90
100
$E_J/E_C$ of Qubit 2
$\zeta_{ZZ}(P)$ [2π kHz]
0.05
0.00
−0.05
000 001 010 011 100 101 110 111
Parity (P+1)/2

Fig. 4

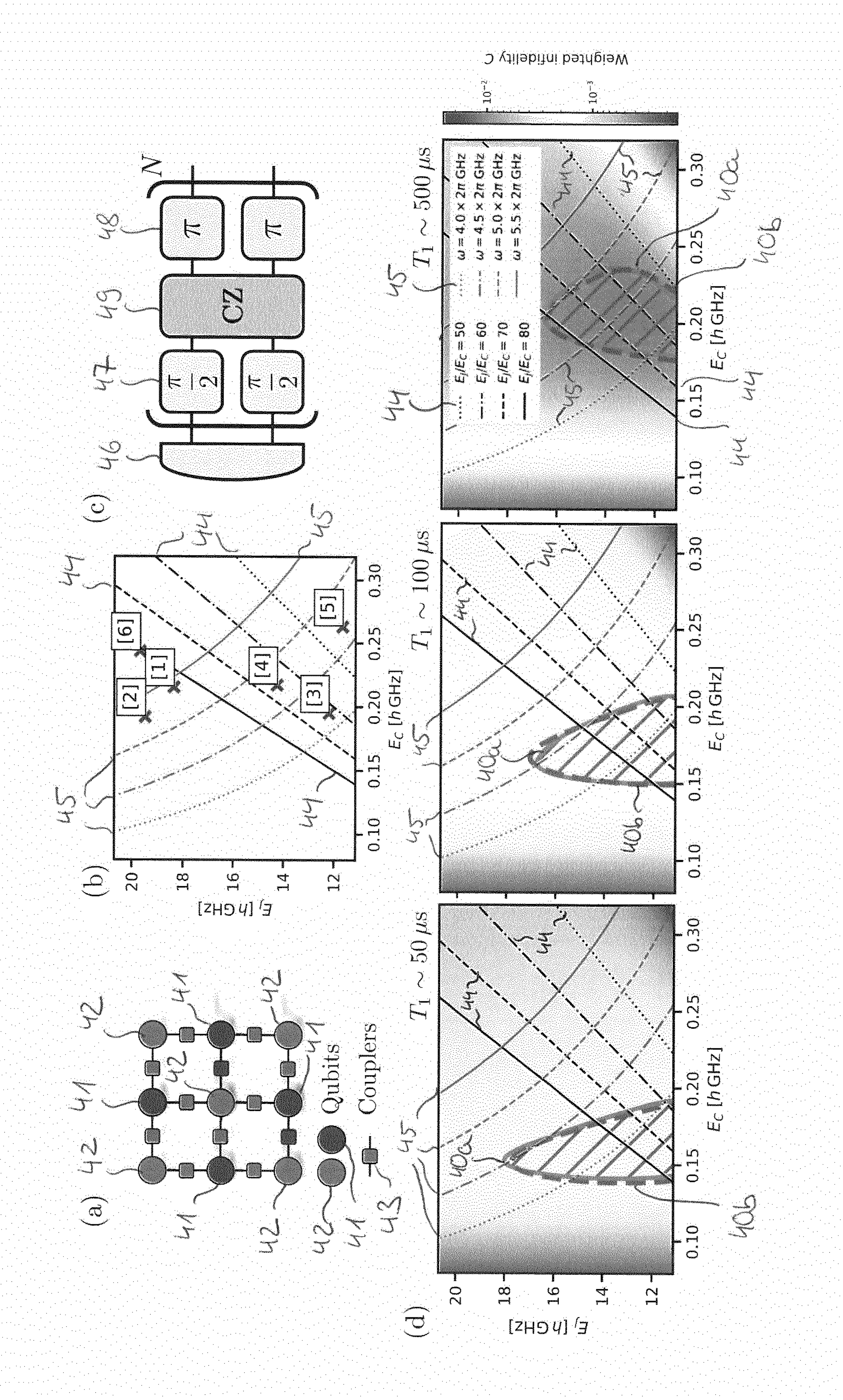
(a)
Qubits
Couplers
(b)
$E_J$ [$h$ GHz]
$E_C$ [$h$ GHz]
[1]
[2]
[3]
[4]
[5]
[6]
(c)
CZ
N
(d)
$T_1 \sim 50\,\mu s$
$T_1 \sim 100\,\mu s$
$T_1 \sim 500\,\mu s$
$E_J/E_C = 50$
$E_J/E_C = 60$
$E_J/E_C = 70$
$E_J/E_C = 80$
$\omega = 4.0 \times 2\pi$ GHz
$\omega = 4.5 \times 2\pi$ GHz
$\omega = 5.0 \times 2\pi$ GHz
$\omega = 5.5 \times 2\pi$ GHz
Weighted infidelity C

Fig.5 (a)

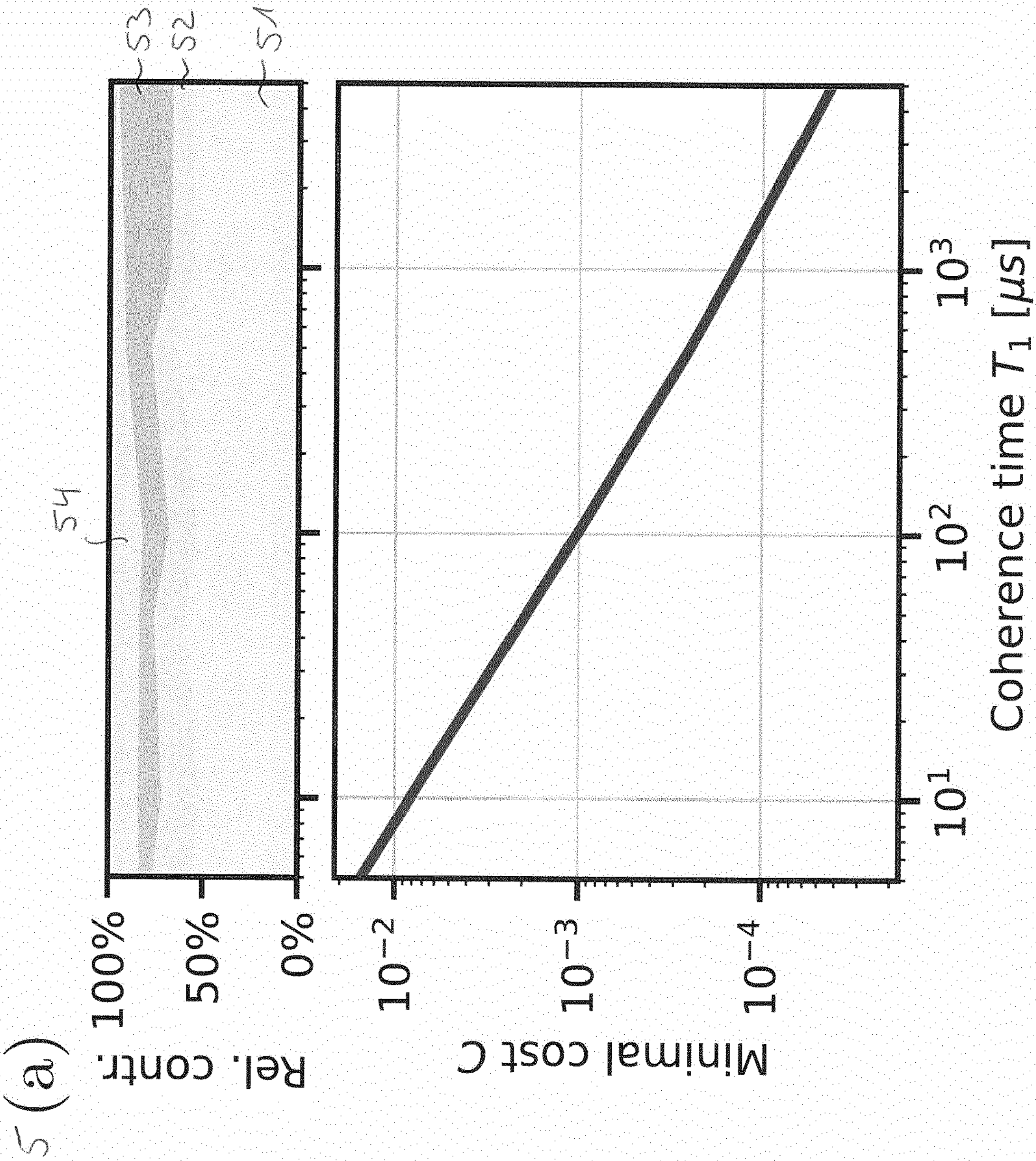
Rel. contr.
100%
50%
0%
54
53
52
51
Minimal cost C
$10^{-2}$
$10^{-3}$
$10^{-4}$
$10^1$
$10^2$
$10^3$
Coherence time $T_1$ [$\mu s$]

Fig.5 (b)

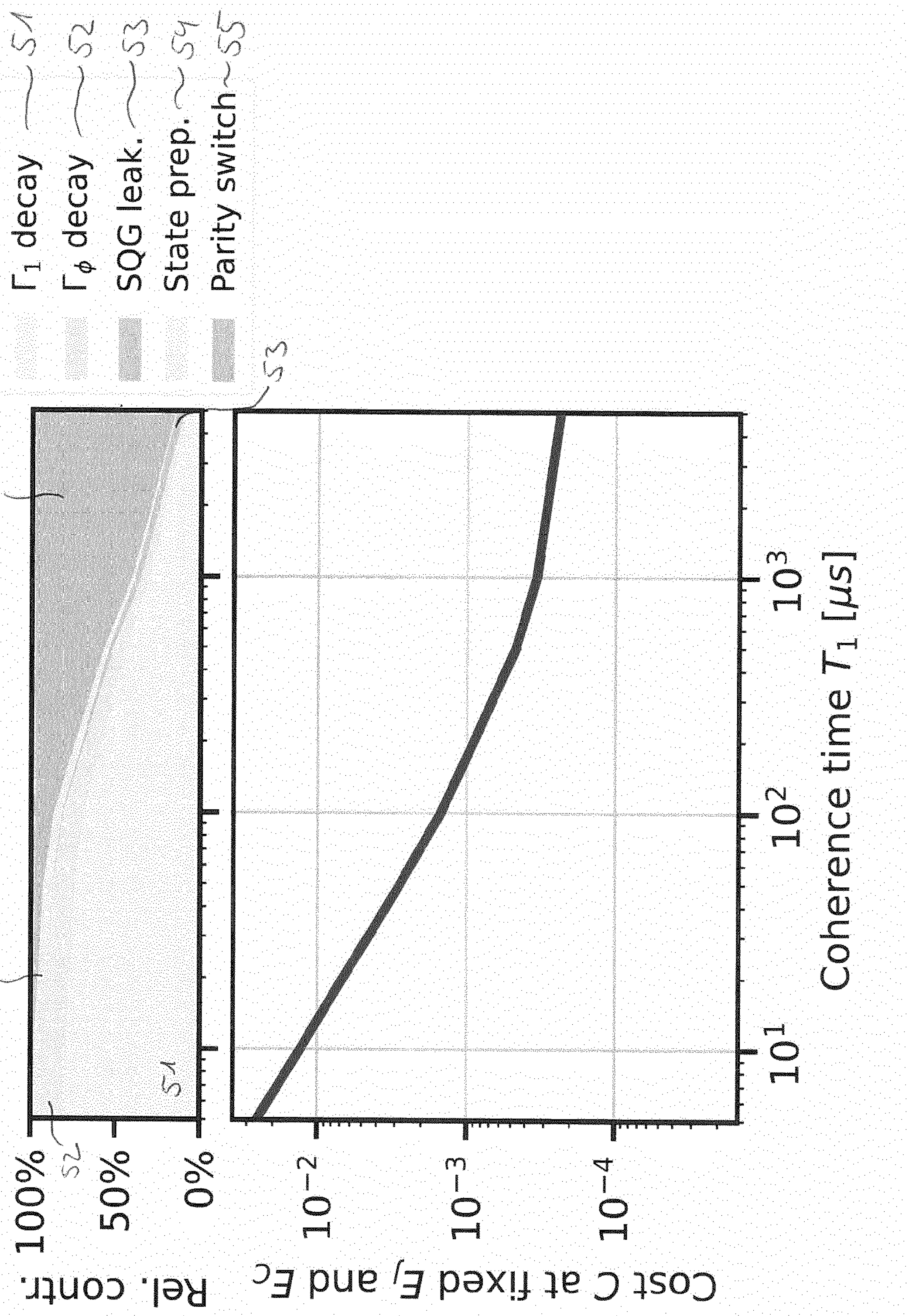

Γ1 decay ~51
Γφ decay ~52
SQG leak. ~53
State prep. ~54
Parity switch ~55
55
54
51
52
53
100%
50%
0%
Rel. contr.
10−2
10−3
10−4
Cost C at fixed EJ and EC
10¹
10²
10³
Coherence time T1 [μs]

Europäisches Patentamt
European Patent Office
Office européen des brevets

# EUROPEAN SEARCH REPORT

Application Number
EP 23 19 3779

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Google AI ET AL: "Supplementary information for "Quantum supremacy using a programmable superconducting processor"", , 28 December 2019 (2019-12-28), pages 1-67, XP093127123, Retrieved from the Internet: URL:https://arxiv.org/pdf/1910.11333.pdf [retrieved on 2024-02-05] * the whole document * ----- | 1-16 | INV. G06N10/40 G06N10/70 |
| A | Yan Fei ET AL: "Engineering framework for optimizing superconducting qubit designs", arXiv.org, 7 June 2020 (2020-06-07), pages 1-6, XP093127630, Ithaca DOI: 10.48550/ARXIV.2006.04130 Retrieved from the Internet: URL:https://arxiv.org/pdf/2006.04130.pdf [retrieved on 2024-02-06] * page 1 - page 4 * ----- | 1-16 | TECHNICAL FIELDS SEARCHED (IPC) G06N |
| A | SHAI MACHNES ET AL: "Gradient optimization of analytic controls: the route to high accuracy quantum optimal control", ARXIV.ORG, CORNELL UNIVERSITY LIBRARY, 201 OLIN LIBRARY CORNELL UNIVERSITY ITHACA, NY 14853, 15 July 2015 (2015-07-15), XP081353823, DOI: 10.1103/PHYSREVLETT.120.150401 * page 1 - page 5 * ----- -/-- | 1-16 | |

The present search report has been drawn up for all claims

3

| Place of search | Date of completion of the search | Examiner |
|---|---|---|
| The Hague | 12 February 2024 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 23 19 3779

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XU YILUN ET AL: "Automatic Qubit Characterization and Gate Optimization with QubiC", ACM TRANSACTIONS ON QUANTUM COMPUTING, ACMPUB27, NEW YORK, NY, vol. 4, no. 1, 21 October 2022 (2022-10-21), pages 1-12, XP058964210, ISSN: 2643-6809, DOI: 10.1145/3529397 * Abstract, I. Introduction, 2. Single-qubit characterization and gate optimization, 3. Two-qubit gate (CNOT) calibration * ----- | 1-16 | |
| T | Papi Miha ET AL: "Charge-parity switching effects and optimisation of transmon-qubit design parameters", , 17 November 2023 (2023-11-17), pages 1-24, XP093127102, Retrieved from the Internet: URL:https://arxiv.org/pdf/2309.17168.pdf [retrieved on 2024-02-05] * the whole document * ----- | | TECHNICAL FIELDS SEARCHED (IPC) |

The present search report has been drawn up for all claims

3

| Place of search | Date of completion of the search | Examiner |
|---|---|---|
| The Hague | 12 February 2024 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2023057679 A1

### Non-patent literature cited in the description


- **J.M. MARTINIS**. Surface loss calculations and design of a superconducting transmon qubit with tapered wiring. *npj Quantum Inf*, 2022, vol. 8, 26
- Gate-based superconducting quantum computing. *J. Appl. Phys.*, 2021, vol. 129, 041102
- **M. PAPIC** ; **I. DE VEGA**. *Phys. Rev. A*, vol. 105, 022605
- **M. PAPIC et al.** *arXiv:2305.08916*
- **H. SUOMINEN**. Qubit characterization and optimal control. *Master's thesis, University of Helsinki, Department of Physics, Helsinki*, 28 February 2022
- **KJAERGAARD, M. et al.** Superconducting qubits: Current state of play. *Annu. Rev. Condens. Matter Phys*, 2020, vol. 11, 369-395, https://doi.org/10.1146/annurev-conmatphys-031119-050605
- **HUANG, H.-L.** ; **WU, D.** ; **FAN, D** ; **ZHU, X**. Superconducting quantum computing: a review. *Sci. China Inf: Sci*, 2020, vol. 63
- **MARTINIS, J. M**. Surface loss calculations and design of a superconducting transmon qubit with tapered wiring. *npj Quantum Inf*, 2022, vol. 8, 26
- **EUN, S.** ; **PARK, S. H.** ; **SEO, K** ; **CHOI, K** ; **HAHN, S.** *Shape optimization of superconducting transmon qubit for low surface dielectric loss*, 2022, vol. 2211, 14159
- **KOCH, J. et al.** Charge-insensitive qubit design derived from the cooper pair box. *Phys. Rev. A*, 2007, vol. 76, 042319
- **ARUTE, F. et al.** Quantum supremacy using a programmable superconducting processor. *Nature*, 2019, vol. 574, 505-510
- **ACHARYA, R. et al.** Suppressing quantum errors by scaling a surface code logical qubit. *Nature*, 2023, vol. 614, 676-681
- **KIM, Y et al.** Evidence for the utility of quantum computing before fault tolerance. *Nature*, 2023, vol. 618, 500-505
- **CAO, S. et al.** Generation of genuine entanglement up to 51 superconducting qubits. *Nature*, 2023, 41586-023, 06195-1
- **WU, Y et al.** Strong quantum computational advantage using a superconducting quantum processor. *Phys. Rev. Lett.*, 2021, vol. 127, 180501
- **GLAZMAN, L.** ; **CATELANI, G.** Bogoliubov quasiparticles in superconducting qubits. *SciPost Phys. Lect. Notes*, 2021
- **CATELANI, G.** ; **PEKOLA, J. P.** Using materials for quasiparticle engineering. *Mater. for Quantum Technol.*, 2022, vol. 2, 013001
- **CATELANI, G et al.** Quasiparticle relaxation of superconducting qubits in the presence of flux. *Phys. Rev. Lett.*, 2011, vol. 106, 077002
- **CATELANI, G.** ; **SCHOELKOPF, R. J.** ; **DEVORET, M. H** ; **GLAZMAN, L. I**. Relaxation and frequency shifts induced by quasiparticles in superconducting qubits. *Phys. Rev. B*, 2011, vol. 84, 064517
- **CÓRCOLES, A. D. et al.** Protecting superconducting qubits from radiation. *Appl. Phys. Lett.*, 2011, vol. 99, 181906, https://pubs.aip.org/aip/apl/article-pdf/doi/10.1063/1.3658630/16731205/181906_1_online.pdf
- **CATELANI, G.** ; **NIGG, S. E.** ; **GIRVIN, S. M.** ; **SCHOELKOPF, R. J.** ; **GLAZMAN, L. I**. Decoherence of superconducting qubits caused by quasiparticle tunneling. *Phys. Rev. B*, 2012, vol. 86, 184514
- **CATELANI, G**. Parity switching and decoherence by quasiparticles in single-junction transmons. *Phys. Rev. B*, 2014, vol. 89, 094522
- **POP, I. M. et al.** Coherent suppression of electromagnetic dissipation due to superconducting quasiparticles. *Nature*, 2014, vol. 508, 369-372
- **RIWAR, R.-P et al.** Normal-metal quasiparticle traps for superconducting qubits. *Phys. Rev. B*, 2016, vol. 94, 104516
- **HOSSEINKHANI, A** ; **RIWAR, R.-P.** ; **SCHOELKOPF, R. J** ; **GLAZMAN, L. I** ; **CATELANI, G**. Optimal configurations for normal-metal traps in transmon qubits. *Phys. Rev. Appl*, 2017, vol. 8, 064028
- **HOSSEINKHANI, A.** ; **CATELANI, G**. Proximity effect in normal-metal quasiparticle traps.. *Phys. Rev. B*, 2018, vol. 97, 054513

- **SUN, L. et al.** Measurements of quasiparticle tunneling dynamics in a band-gap-engineered transmon qubit. *Phys. Rev. Lett.*, 2012, vol. 108, 230509
- **RIWAR, R.-P** ; **CATELANI, G**. Efficient quasiparticle traps with low dissipation through gap engineering. *Phys. Rev. B*, 2019, vol. 100, 144514
- **MARCHEGIANI, G.** ; **AMICO, L** ; **CATELANI, G**. Quasiparticles in superconducting qubits with asymmetric junctions. *PRX Quantum*, 2022, vol. 3, 040338
- **PAN, X et al.** Engineering superconducting qubits to reduce quasiparticles and charge noise. *Nat. Commun.*, 2022, vol. 13, 7196
- **SMITH, W. C.** ; **KOU, A.** ; **XIAO, X** ; **VOOL, U** ; **DEVORET, M. H**. Superconducting circuit protected by two-cooper-pair tunneling. *npj Quantum Inf.*, 2020, vol. 6, 8
- **SUNG, Y. et al.** Realization of high-fidelity cz and zz-free iswap gates with a tunable coupler. *Phys. Rev. X*, 2021, vol. 11, 021058
- **XU, H. et al.** Realization of adiabatic and diabatic CZ gates in superconducting qubits coupled with a tunable coupler. *Chin. Phys. B*, 2021, vol. 30, 044212
- **YAN, F. et al.** Tunable coupling scheme for implementing high-fidelity two-qubit gates. *Phys. Rev. Appl*, 2018, vol. 10, 054062
- **CHU, J** ; **YAN, F.** Coupler-assisted controlled-phase gate with enhanced adiabaticity. *Phys. Rev. Appl.*, 2021, vol. 16, 054020
- **PAPIČ, M** ; **AUER, A** ; **DE VEGA, I**. *Error sources of quantum gates in superconducting qubits*, 2023, vol. 2305, 08916
- **MARXER, F. et al.** Long-distance transmon coupler with cz-gate fidelity above 99.8%. *PRX Quantum*, 2023, vol. 4, 010314
- **SETE, E. A.** ; **CHEN, A. Q.** ; **MANENTI, R** ; **KULSHRESHTHA, S.** ; **POLETTO, S**. Floating tunable coupler for scalable quantum computing architectures. *Phys. Rev. Appl*, 2021, vol. 15, 064063
- **GOTO, H**. Double-transmon coupler: Fast two-qubit gate with no residual coupling for highly detuned superconducting qubits. *Phys. Rev. Appl*, 2022, vol. 18, 034038
- **STEHLIK, J et al.** Tunable coupling architecture for fixed-frequency transmon superconducting qubits. *Phys. Rev. Lett.*, 2021, vol. 127, 080505
- **XU, Y. et al.** High-fidelity, high-scalability two-qubit gate scheme for superconducting qubits. *Phys. Rev. Lett*, 2020, vol. 125, 240503
- **JURCEVIC, P** ; **GOVIA, L. C. G.** Effective qubit dephasing induced by spectator-qubit relaxation. *Quantum Sci. Technol.*, 2022, vol. 7, 045033
- **MUNDADA, P.** ; **ZHANG, G.** ; **HAZARD, T.** ; **HOUCK, A**. Suppression of qubit crosstalk in a tunable coupling superconducting circuit. *Phys. Rev. Appl.*, 2019, vol. 12, 054023
- **WANG, C. et al.** Towards practical quantum computers: transmon qubit with a lifetime approaching 0.5 milliseconds. *npj Quantum Inf*, 2022, vol. 8 (3)
- **PLACE, A. P. M. et al.** New material platform for superconducting transmon qubits with coherence times exceeding 0.3 milliseconds. *Nat. Commun.*, 2021, vol. 12, 1779
- **WILLSCH, D. et al.** *Observation of josephson harmonics in tunnel junctions*, 2023, vol. 2302, 09192
- **SERNIAK, K. et al.** Direct dispersive monitoring of charge parity in offset-charge-sensitive transmons. *Phys. Rev. Appl.*, 2019, vol. 12
- **ROL, M. et al.** Fast, high-fidelity conditional-phase gate exploiting leakage interference in weakly anharmonic superconducting qubits. *Phys. Rev. Lett.*, 2019, vol. 123
- **COLLODO, M. C et al.** Implementation of conditional phase gates based on tunable zz interactions. *Phys. Rev. Lett*, 2020, vol. 125, 240502
- **HEUNISCH, L.** ; **EICHLER, C.** ; **HARTMANN, M. J**. *Tunable coupler to fully decouple superconducting qubits*, 2023, vol. 2306, 17007
- **MCKAY, D. C.** ; **WOOD, C. J.** ; **SHELDON, S** ; **CHOW, J. M.** ; **GAMBETTA, J. M**. Efficient z gates for quantum computing. *Phys. Rev. A*, 2017, vol. 96, 022330
- **NIELSEN, M. A** ; **CHUANG, I. L**. Quantum Computation and Quantum Information. Cambridge University Press, 2000
- **DIAMOND, S et al.** Distinguishing parity-switching mechanisms in a superconducting qubit. *PRX Quantum*, 2022, vol. 3, 040304
- **RISTÈ, D et al.** Millisecond charge-parity fluctuations and induced decoherence in a superconducting transmon qubit. *Nat. Commun.*, 2013, vol. 4
- **SERNIAK, K et al.** Hot nonequilibrium quasiparticles in transmon qubits. *Phys. Rev. Lett*, 2018, vol. 121, 157701
- **KURTER, C. et al.** Quasiparticle tunneling as a probe of josephson junction barrier and capacitor material in superconducting qubits. *npj Quantum Inf*, 2022, vol. 8, 31
- **TENNANT, D. M. et al.** Low-frequency correlated charge-noise measurements across multiple energy transitions in a tantalum transmon. *PRX Quantum*, 2022, vol. 3, 030307
- **THORBECK, T.** ; **EDDINS, A.** ; **LAUER, I.** ; **MCCLURE, D. T.** ; **CARROLL, M**. Two-level-system dynamics in a superconducting qubit due to background ionizing radiation. *PRX Quantum*, 2023, vol. 4, 020356

- **MCEWEN, M. et al.** Resolving catastrophic error bursts from cosmic rays in large arrays of superconducting qubits.. *Nat. Phys.*, 2021, vol. 18, 107-111
- **CARDANI, L. et al.** Reducing the impact of radioactivity on quantum circuits in a deep-underground facility. *Nat. Commun*, 2021, vol. 12, 2733
- **GRÜNHAUPT, L. et al.** Loss mechanisms and quasiparticle dynamics in superconducting microwave resonators made of thin-film granular aluminum. *Phys. Rev. Lett.*, 2018, vol. 121, 1-17001
- **WACK, A. et al.** *Quality, speed, and scale: three key attributes to measure the performance of near-term quantum computers*, 2021, vol. 2110, 14108
- **BREUER, H.** ; **PETRUCCIONE, F** ; **PETRUCCIONE, S**. The Theory of Open Quantum Systems. Oxford University Press, 2002
- **EMERSON, J.** ; **ALICKI, R** ; **ZYCZKOWSKI, K**. Scalable noise estimation with random unitary operators. *J. Opt. B: Quantum Semiclassical Opt.*, 2005, vol. 7, S347
- **WOOD, C. J.** ; **GAMBETTA, J. M**. Quantification and characterization of leakage errors. *Phys. Rev. A*, 2018, vol. 97, 032306
- **HASHIM, A. et al.** Randomized compiling for scalable quantum computing on a noisy superconducting quantum processor. *Phys. Rev. X*, 2021, vol. 11, 041039
- **WALLMAN, J. J** ; **FLAMMIA, S. T**. Randomized benchmarking with confidence. *New J. Phys*, 2014, vol. 16, 103032
- **SIDDIQI, I**. Engineering high-coherence superconducting qubits. *Nat. Rev. Mater.*, 2021, vol. 6, 875-891
- **MÜLLER, C.** ; **COLE, J. H.** ; **LISENFELD, J.** Towards understanding two-level-systems in amorphous solids: insights from quantum circuits. *Reports on Prog. Phys*, 2019, vol. 82, 124501
- **CARROLL, M.** ; **ROSENBLATT, S.** ; **JURCEVIC, P.** ; **LAUER, I.** ; **KANDALA, A**. Dynamics of superconducting qubit relaxation times. *npj Quantum Inf.*, 2022, vol. 8, 132
- **PREMKUMAR, A. et al.** Microscopic relaxation channels in materials for superconducting qubits. *Commun. Mater*, 2021, vol. 2, 72
- **CHO, Y et al.** *Simulating noise on a quantum processor: interactions between a qubit and resonant two-level system bath*, 2022
- **LISENFELD, J. et al.** Electric field spectroscopy of material defects in transmon qubits. *npj Quantum Inf.*, 2019, vol. 5
- **ABDURAKHIMOV, L. V. et al.** Identification of different types of high-frequency defects in superconducting qubits. *PRX Quantum*, 2022, vol. 3, 040332
- **ROWER, D. A. et al.** Evolution of 1 / f flux noise in superconducting qubits with weak magnetic fields. *Phys. Rev. Lett*, 2023, vol. 130, 220602
- **BRAUMÜLLER, J. et al.** Characterizing and optimizing qubit coherence based on squid geometry. *Phys. Rev. Appl*, 2020, vol. 13, 054079
- **YAN, F. et al.** The flux qubit revisited to enhance coherence and reproducibility. *Nat. Commun.*, 2016, vol. 7
- **MOTZOI, F** ; **GAMBETTA, J. M.** ; **REBENTROST, P.** ; **WILHELM, F. K**. Simple pulses for elimination of leakage in weakly nonlinear qubits. *Phys. Rev. Lett*, 2009, vol. 103, 110501
- **WENNER, J. et al.** Excitation of superconducting qubits from hot nonequilibrium quasiparticles. *Phys. Rev. Lett.*, 2013, vol. 110, 150502
- **JIN, X. Y et al.** Thermal and residual excited-state population in a 3d transmon qubit. *Phys. Rev. Lett.*, 2015, vol. 114, 240501
- **HEINSOO, J. et al.** Rapid high-fidelity multiplexed readout of superconducting qubits. *Phys. Rev. Appl.*, 2018, vol. 10, 034040
- **BERKE, C.** ; **VARVELIS, E** ; **TREBST, S.** ; **ALTLAND, A.** ; **DIVINCENZO, D. P**. Transmon platform for quantum computing challenged by chaotic fluctuations. *Nat. Commun*, 2022, vol. 13, 2495
- **ALGABA, M. G. et al.** Co-design quantum simulation of nanoscale nmr. *Phys. Rev. Res*, 2022, vol. 4, 043089
- **CHRISTENSEN, B. G. et al.** Anomalous charge noise in superconducting qubits.. *Phys. Rev. B*, 2019, vol. 100, 140503
- **WILEN, C. D. et al.** Correlated charge noise and relaxation errors in superconducting qubits. *Nature*, 2021, vol. 594, 369-373
- **BRAVYI, S.** ; **DIVINCENZO, D. P** ; **LOSS, D.** Schrieffer-wolff transformation for quantum many-body systems.. *Annals Phys*, 2011, vol. 326, 2793-2826
- **ABAD, T.** ; **FERNÁNDEZ-PENDÁS, J.** ; **FRISK KOCKUM, A.** ; **JOHANSSON, G**. Universal fidelity reduction of quantum operations from weak dissipation. *Phys. Rev. Lett.*, 2022, vol. 129, 150504
- **BURNETT, J. J. et al.** Decoherence benchmarking of superconducting qubits. *npj Quantum Inf.*, 2019, vol. 5
- **PAPIČ, M.** ; **DE VEGA, I**. Neural-network-based qubit-environment characterization. *Phys. Rev. A*, 2022, vol. 105, 022605
- **BERGLI, J** ; **GALPERIN, Y. M.** ; **ALTSHULER, B. L**. Decoherence in qubits due to low-frequency noise. *New J. Phys.*, 2009, vol. 11, 025002
- **PALADINO, E.** ; **GALPERIN, Y. M.** ; **FALCI, G.** ; **ALTSHULER, B. L**. 1/f noise: Implications for solid-state quantum information. *Rev. Mod. Phys.*, 2014, vol. 86, 361-418